(19) Europäisches Patentamt
European Patent Office
Office européen des brevets

(11) **EP 4 716 117 A1**

(12) **EUROPEAN PATENT APPLICATION**
published in accordance with Art. 153(4) EPC

(43) Date of publication:
**25.03.2026 Bulletin 2026/13**

(21) Application number: **24806491.7**

(22) Date of filing: **11.05.2024**

(51) International Patent Classification (IPC):
***H04B 17/309*** *(2015.01)*

(52) Cooperative Patent Classification (CPC):
**H04B 17/309; H04B 17/318**

(86) International application number:
**PCT/CN2024/092500**

(87) International publication number:
**WO 2024/235139 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023 CN 202310544251**

(71) Applicant: **Datang Mobile Communications
Equipment Co., Ltd.
Beijing 100085 (CN)**

(72) Inventors:
• **REN, Xiaotao
Beijing 100085 (CN)**
• **REN, Bin
Beijing 100085 (CN)**

(74) Representative: **Maiwald GmbH
Elisenhof
Elisenstraße 3
80335 München (DE)**

(54) **INFORMATION PROCESSING METHOD, APPARATUS AND DEVICE**

(57) The present disclosure provides an information processing method, device and apparatus. The information processing method includes: calculating a sidelink positioning reference signal (SL-PRS) channel busy rate according to first information. The first information at least includes measurement information of an SL-PRS.

calculating a sidelink positioning reference signal (SL-PRS) channel busy rate according to first information; where the first information at least includes measurement information of an SL-PRS — 31

FIG. 3

## Description

The present application is filed based on and claims the priority of Chinese Application No. 202310544251.5 filed on May 15, 2023, entitled "information transmission method, device and equipment", the disclosure of which are incorporated in their entireties by reference herein.

## TECHNICAL FIELD

The present disclosure relates to the field of communication technology, and in particular to an information processing method, device and apparatus.

## BACKGROUND

In the new radio (NR) positioning technology of the related art, only downlink positioning reference signal and uplink positioning reference signal are defined in the air interface between the base station and user equipment (UE), and sidelink positioning reference signal (SL-PRS) is not defined in the proximity communication port 5 (PCS) interface between UEs. Considering relative positioning between the UEs, that is, the demand for sidelink positioning, it is necessary to introduce a sidelink positioning reference signal transmitted between the UEs, so that the UE can complete the relative positioning process between UEs directly using SL-PRS, without relying on downlink positioning reference signals or uplink positioning reference signals (i.e., enabling the UE to perform the positioning process directly in the sidelink without depending on the base station).

However, when SL-PRS is introduced, it is necessary to clarify relevant conditions of channels (such as channel busy condition) to ensure accurate transmission of SL-PRS, but there is no relevant solution in the related art.

As a result, the related art suffers from the problem of being unable to accurately determine a channel busy ratio for SL-PRS.

## SUMMARY

An objective of the present disclosure is to provide an information processing method, device and apparatus, which can solve the problem of being unable to accurately determine a channel busy ratio for SL-PRS in the related art.

In order to solve the above technical problem, one embodiment of the present disclosure provides an information processing method, applied to a user equipment (UE), including:

> calculating a sidelink positioning reference signal (SL-PRS) channel busy rate according to first information;
> wherein the first information at least includes measurement information of an SL-PRS.

In some embodiments, the measurement information of the SL-PRS includes at least one of the following:

> measurement information of full-sensing;
> measurement information of partial-sensing or periodic-sensing;
> measurement information of configured full-sensing measurement window; and
> measurement information of re-evaluation or short-term-sensing.

In some embodiments, the first information includes at least one of the following sub-information:

> SL-PRS received signal strength indication (RSSI);
> SL-PRS reference signal receiving power (RSRP);
> physical sidelink control channel (PSCCH) RSSI;
> physical sidelink control channel reference signal receiving power (PSCCH RSRP);
> sidelink received signal strength indication SL-RSSI;
> sidelink reference signal receiving power (SL-RSRP);
> physical sidelink shared channel received signal strength indication (PSSCH RSSI);
> physical sidelink shared channel reference signal receiving power (PSSCH RSRP); and
> SL-PRS pattern occupancy ratio.

In some embodiments, the first information includes at least two items of the sub-information; the calculating a sidelink positioning reference signal (SL-PRS) channel busy rate according to first information, includes: calculating the SL-PRS channel busy rate according to the sub-information with the largest value among the at least two items of the sub-information.

In some embodiments, the first information is measured based on an SL-PRS dedicated resource pool.

In some embodiments, the first information is measured based on an SL-PRS shared resource pool; the method further includes:

> measuring second information related to a sidelink channel busy rate in the SL-PRS shared resource pool;
> wherein the calculating a sidelink positioning reference signal (SL-PRS) channel busy rate according to first information, includes:

>> calculating an SL-PRS candidate channel busy rate based on the first information;
>> calculating an SL channel busy rate based on the second information;
>> obtaining a maximum value of the SL-PRS candidate channel busy rate and the SL channel busy rate as the SL-PRS channel busy rate.

In some embodiments, the second information includes at least one of the following sub-information:

SL-PRS RSSI;
SL-PRS RSRP;
PSCCH RSSI;
PSCCH RSRP;
SL-RSSI;
SL-RSRP;
PSSCH RSSI;
PSSCH RSRP;
SL-PRS pattern occupancy ratio.

In some embodiments, the SL-PRS pattern occupancy ratio refers to a ratio between the number of first combs and the number of second combs in an SL-PRS comb pattern;

wherein the number of first combs refers to the number of occupied combs; and
the number of second combs refers to the number of all available combs.

In some embodiments, the first information is measured within a first sensing measurement window by the UE performing a full sensing operation;

or, the first information is measured within a second sensing measurement window by the UE performing a partial sensing operation or a periodic sensing operation;
or, the first information is measured within a third sensing measurement window by the UE performing a re-evaluation operation or a short-term sensing operation;
wherein the first sensing measurement window is a full sensing measurement window, the second sensing measurement window is a partial sensing measurement window or a periodic sensing measurement window, and the third sensing measurement window is a re-evaluation measurement window or a short-term sensing measurement window.

In some embodiments, the SL-PRS channel busy rate in slot or time n refers to a part of a first subchannel in the resource pool;
the first subchannel refers to a subchannel in which the first information measured by the UE exceeds a configured or preconfigured threshold value.

In some embodiments, the first information is obtained by periodical measurement in the first sensing measurement window, the second sensing measurement window or the third sensing measurement window;
or, the first information is obtained via measurement triggered by SL-PRS transmission requirement information.

In some embodiments, the calculating a sidelink positioning reference signal (SL-PRS) channel busy rate according to first information, includes:
calculating the SL-PRS channel busy rate with a first formula; wherein the first formula is:

$$SL\_PRS\_CBR_n = \frac{N_{SC}}{N_{SC\_Total}} \times 100\%,$$

SL_PRS_CBR_n represents an SL-PRS channel busy rate in slot or time n;
$N_{SC}$ represents the number of subchannels in which first information measured by the UE exceeds the configured or pre-configured threshold value;
$N_{SC\_Total}$ represents the total number of subchannels in the resource pool.

In some embodiments, the first information is measured in a first slot by the UE performing a partial sensing operation;
the first slot refers to a slot in which the UE performs reception of a physical sidelink control channel (PSCCH) and/or SL-PRS within a channel busy rate (CBR) measurement window.
In some embodiments, the calculating a sidelink positioning reference signal (SL-PRS) channel busy rate according to first information, includes:
calculating the SL-PRS channel busy rate according to the first information in a slot in which the first information is measured.
In some embodiments, the method further includes:
using a configured or pre-configured first preset value as the SL-PRS channel busy rate, when the number of the first slots is less than a configured or pre-configured first threshold.
In some embodiments, the SL-PRS channel busy rate in slot or time n refers to a part of the second subchannel in the resource pool;
the second subchannel refers to a subchannel in which the first information measured by the UE exceeds the configured or pre-configured threshold value, and the first information is sensed and measured by the UE in K SL-PRS sensing occasions or periodic sensing occasions before the slot or time n; K is a natural number greater than or equal to 1.
In some embodiments, the K SL-PRS sensing occasions or periodic sensing occasions are occasions corresponding to all bits configured as 1 in corresponding high layer parameters.
In some embodiments, for each subchannel, a corresponding value of the first information is: an average value or maximum value of all measurement values of the first information in the K SL-PRS sensing occasions or periodic sensing occasions.
In some embodiments, the SL-PRS channel busy rate in slot or time n refers to a part of a third subchannel in the resource pool;
the third subchannel refers to a subchannel in which the first information measured by the UE exceeds the configured or preconfigured threshold value, and the first information is sensed and measured by the UE in all sensing occasions or periodic sensing occasions within a fourth sensing measurement window.

In some embodiments, a start time of a target time window is slot or time n-T, and an end time is slot or time n-1; the target time window is the first sensing measurement window, the second sensing measurement window, the third sensing measurement window, or the fourth sensing measurement window;

a value of T is configured by signaling notification, or the value of T is pre-configured; when the value of T is pre-configured, T is $M \times 100$ms or $L \times 100$ slots, where M and L are both positive integers greater than or equal to 1.

In some embodiments, for each subchannel, a corresponding value of the first information is an average value or maximum value of all measurement values of the first information in all sensing occasions or periodic sensing occasions within the fourth sensing measurement window.

In some embodiments, the method further includes:

transmitting the SL-PRS channel busy rate and first indication information to a first device;
wherein the first device is a UE or a network device; the first indication information is used to indicate whether the SL-PRS channel busy rate is calculated for the SL-PRS dedicated resource pool or for the SL-PRS shared resource pool.

In some embodiments, the method further includes:

determining an SL-PRS transmission parameter according to the SL-PRS channel busy rate;
wherein the SL-PRS transmission parameter includes: SL-PRS maximum transmission power, and/or, SL-PRS subchannel number range.

One embodiment of the present disclosure provides an information processing method, applied to a first device, including:

receiving an SL-PRS channel busy rate and first indication information transmitted by a user equipment (UE);
wherein the first device is a UE or a network device, the first indication information is used to indicate whether the SL-PRS channel busy rate is calculated for an SL-PRS dedicated resource pool or for an SL-PRS shared resource pool.

In some embodiments, the method further includes:

configuring a first sensing measurement window for the UE performing a full sensing operation, wherein the first sensing measurement window is a full sensing measurement window; or, configuring a second sensing measurement window for the UE performing a partial sensing operation or a periodic sensing operation, wherein the second sensing measurement window is a partial sensing measurement window or a periodic sensing measurement window; or, configuring a third sensing measurement window for the UE performing a re-evaluation operation or a short-term sensing operation, wherein the third sensing measurement window is a re-evaluation measurement window or a short-term sensing measurement window;

and/or, transmitting a configured threshold value to the UE for the UE to obtain the first subchannel or the second subchannel or the third subchannel;

and/or, configuring the first sensing measurement window, the second sensing measurement window or the third sensing measurement window periodically to the UE, thereby enabling the UE to periodically measure the first information in the first sensing measurement window, the second sensing measurement window or the third sensing measurement window;

and/or, configuring a first threshold to the UE, thereby enabling the UE to use the configured or pre-configured first preset value as the SL-PRS channel busy rate when the number of first slots is less than the first threshold, wherein the first slot refers to a slot in which the UE receives PSCCH and/or SL-PRS within the channel busy rate CBR measurement window;

and/or, configuring high layer parameters of SL-PRS sensing occasion or periodic sensing occasion to the UE, thereby enabling the UE to use occasions corresponding to all bits configured as 1 in the high layer parameters as K SL-PRS sensing occasions or periodic sensing occasions, wherein K is a natural number greater than or equal to 1.

In some embodiments, a start time of the target time window is slot or time n-T, and an end time is slot or time n-1; the target time window is the first sensing measurement window, the second sensing measurement window or the third sensing measurement window; a value of T is configured to the UE by the first device through signaling notification, or the value of T is pre-configured; when the value of T is pre-configured, T is $M \times 100$ms or $L \times 100$ slots, where M and L are both positive integers greater than or equal to 1.

One embodiment of the present disclosure provides an information processing device, which is a user equipment (UE), inlcuding: a memory, a transceiver, and a processor;

wherein the memory is used to store a computer program; the transceiver is used to send and receive data under the control of the processor; the processor is used to read the computer program in the memory and perform the following operations:

calculating a sidelink positioning reference signal (SL-PRS) channel busy rate according to first information;
wherein the first information at least includes measurement information of an SL-PRS.

In some embodiments, the measurement information of the SL-PRS includes at least one of the following:

measurement information of full-sensing;
measurement information of partial-sensing or periodic-sensing;
measurement information of configured full-sensing measurement window; and
measurement information of re-evaluation or short-term-sensing.

In some embodiments, the first information includes at least one of the following sub-information:

SL-PRS received signal strength indication (RSSI);
SL-PRS reference signal receiving power (RSRP);
physical sidelink control channel (PSCCH) RSSI;
physical sidelink control channel reference signal receiving power (PSCCH RSRP);
sidelink received signal strength indication SL-RSSI;
sidelink reference signal receiving power (SL-RSRP);
physical sidelink shared channel received signal strength indication (PSSCH RSSI);
physical sidelink shared channel reference signal receiving power (PSSCH RSRP); and
SL-PRS pattern occupancy ratio.

In some embodiments, the first information includes at least two items of the sub-information;
the calculating a sidelink positioning reference signal (SL-PRS) channel busy rate according to first information, includes:
calculating the SL-PRS channel busy rate according to the sub-information with the largest value among the at least two items of the sub-information.
In some embodiments, the first information is measured based on an SL-PRS dedicated resource pool.
In some embodiments, the first information is measured based on an SL-PRS shared resource pool;
the operations further include:

measuring second information related to a sidelink channel busy rate in the SL-PRS shared resource pool;
wherein the calculating a sidelink positioning reference signal (SL-PRS) channel busy rate according to first information, includes:

calculating an SL-PRS candidate channel busy rate based on the first information;
calculating an SL channel busy rate based on the second information;
obtaining a maximum value of the SL-PRS candidate channel busy rate and the SL channel busy rate as the SL-PRS channel busy rate.

In some embodiments, the second information includes at least one of the following sub-information:

SL-PRS RSSI;
SL-PRS RSRP;
PSCCH RSSI;
PSCCH RSRP;
SL-RSSI;
SL-RSRP;
PSSCH RSSI;
PSSCH RSRP;
SL-PRS pattern occupancy ratio.

In some embodiments, the SL-PRS pattern occupancy ratio refers to a ratio between the number of first combs and the number of second combs in an SL-PRS comb pattern;

wherein the number of first combs refers to the number of occupied combs; and
the number of second combs refers to the number of all available combs.

In some embodiments, the first information is measured within a first sensing measurement window by the UE performing a full sensing operation;

or, the first information is measured within a second sensing measurement window by the UE performing a partial sensing operation or a periodic sensing operation;
or, the first information is measured within a third sensing measurement window by the UE performing a re-evaluation operation or a short-term sensing operation;
wherein the first sensing measurement window is a full sensing measurement window, the second sensing measurement window is a partial sensing measurement window or a periodic sensing measurement window, and the third sensing measurement window is a re-evaluation measurement window or a short-term sensing measurement window.

In some embodiments, the SL-PRS channel busy rate in slot or time n refers to a part of a first subchannel in the resource pool;
the first subchannel refers to a subchannel in which the first information measured by the UE exceeds a configured or preconfigured threshold value.
In some embodiments, the first information is obtained by periodical measurement in the first sensing measurement window, the second sensing measurement window or the third sensing measurement window; or, the first information is obtained via measurement triggered by SL-PRS transmission requirement information.

In some embodiments, the calculating a sidelink positioning reference signal (SL-PRS) channel busy rate according to first information, includes:

calculating the SL-PRS channel busy rate with a first formula; wherein the first formula is:

$$SL\_PRS\_CBR_n = \frac{N_{SC}}{N_{SC\_Total}} \times 100\%,$$

$SL\_PRS\_CBR_n$ represents an SL-PRS channel busy rate in slot or time n;

$N_{SC}$ represents the number of subchannels in which first information measured by the UE exceeds the configured or pre-configured threshold value;

$N_{SC\_Total}$ represents the total number of subchannels in the resource pool.

In some embodiments, the first information is measured in a first slot by the UE performing a partial sensing operation;

the first slot refers to a slot in which the UE performs reception of a physical sidelink control channel (PSCCH) and/or SL-PRS within a channel busy rate (CBR) measurement window.

In some embodiments, the calculating a sidelink positioning reference signal (SL-PRS) channel busy rate according to first information, includes:

calculating the SL-PRS channel busy rate according to the first information in a slot in which the first information is measured.

In some embodiments, the operations further include:

using a configured or pre-configured first preset value as the SL-PRS channel busy rate, when the number of the first slots is less than a configured or pre-configured first threshold.

In some embodiments, the SL-PRS channel busy rate in slot or time n refers to a part of the second subchannel in the resource pool;

the second subchannel refers to a subchannel in which the first information measured by the UE exceeds the configured or pre-configured threshold value, and the first information is sensed and measured by the UE in K SL-PRS sensing occasions or periodic sensing occasions before the slot or time n; K is a natural number greater than or equal to 1.

In some embodiments, the K SL-PRS sensing occasions or periodic sensing occasions are occasions corresponding to all bits configured as 1 in corresponding high layer parameters.

In some embodiments, for each subchannel, a corresponding value of the first information is: an average value or maximum value of all measurement values of the first information in the K SL-PRS sensing occasions or periodic sensing occasions.

In some embodiments, the SL-PRS channel busy rate in slot or time n refers to a part of a third subchannel in the resource pool;

the third subchannel refers to a subchannel in which the first information measured by the UE exceeds the configured or preconfigured threshold value, and the first information is sensed and measured by the UE in all sensing occasions or periodic sensing occasions within a fourth sensing measurement window.

In some embodiments, a start time of a target time window is slot or time n-T, and an end time is slot or time n-1; the target time window is the first sensing measurement window, the second sensing measurement window, the third sensing measurement window, or the fourth sensing measurement window;

a value of T is configured by signaling notification, or the value of T is pre-configured; when the value of T is pre-configured, T is M×100ms or L×100 slots, where M and L are both positive integers greater than or equal to 1.

In some embodiments, for each subchannel, a corresponding value of the first information is an average value or maximum value of all measurement values of the first information in all sensing occasions or periodic sensing occasions within the fourth sensing measurement window.

In some embodiments, the operations further include:

transmitting, through the transceiver, the SL-PRS channel busy rate and first indication information to a first device;

wherein the first device is a UE or a network device; the first indication information is used to indicate whether the SL-PRS channel busy rate is calculated for the SL-PRS dedicated resource pool or for the SL-PRS shared resource pool.

In some embodiments, the operations further include:

determining an SL-PRS transmission parameter according to the SL-PRS channel busy rate;

wherein the SL-PRS transmission parameter includes: SL-PRS maximum transmission power, and/or, SL-PRS subchannel number range.

One embodiment of the present disclosure provides an information processing device, which is a first device, including: a memory, a transceiver, and a processor;

wherein the memory is used to store a computer program; the transceiver is used to send and receive data under the control of the processor; the processor is used to read the computer program in the memory and perform the following operations:

receiving, through the transceiver, an SL-PRS channel busy rate and first indication information transmitted by a user equipment (UE);
wherein the first device is a UE or a network device, the first indication information is used to indicate whether the SL-PRS channel busy rate is calculated for an SL-PRS dedicated resource pool or for an SL-PRS shared resource pool.

In some embodiments, the operations further include:

configuring a first sensing measurement window for the UE performing a full sensing operation, wherein the first sensing measurement window is a full sensing measurement window; or, configuring a second sensing measurement window for the UE performing a partial sensing operation or a periodic sensing operation, wherein the second sensing measurement window is a partial sensing measurement window or a periodic sensing measurement window; or, configuring a third sensing measurement window for the UE performing a re-evaluation operation or a short-term sensing operation, wherein the third sensing measurement window is a re-evaluation measurement window or a short-term sensing measurement window;
and/or, transmitting a configured threshold value to the UE for the UE to obtain the first subchannel or the second subchannel or the third subchannel;
and/or, configuring the first sensing measurement window, the second sensing measurement window or the third sensing measurement window periodically to the UE, thereby enabling the UE to periodically measure the first information in the first sensing measurement window, the second sensing measurement window or the third sensing measurement window;
and/or, configuring a first threshold to the UE, thereby enabling the UE to use the configured or preconfigured first preset value as the SL-PRS channel busy rate when the number of first slots is less than the first threshold, wherein the first slot refers to a slot in which the UE receives PSCCH and/or SL-PRS within the channel busy rate CBR measurement window;
and/or, configuring high layer parameters of SL-PRS sensing occasion or periodic sensing occasion to the UE, thereby enabling the UE to use occasions corresponding to all bits configured as 1 in the high layer parameters as K SL-PRS sensing occasions or periodic sensing occasions, wherein K is a natural number greater than or equal to 1.

In some embodiments, a start time of the target time window is slot or time n-T, and an end time is slot or time n-1; the target time window is the first sensing measurement window, the second sensing measurement window or the third sensing measurement window; a value of T is configured to the UE by the first device through signaling notification, or the value of T is preconfigured; when the value of T is pre-configured, T is M×100ms or L×100 slots, where M and L are both positive integers greater than or equal to 1.

One embodiment of the present disclosure provides an information processing apparatus, applied to a user equipment (UE), including:

a first calculation unit used to calculate a sidelink positioning reference signal (SL-PRS) channel busy rate according to first information;
wherein the first information at least includes measurement information of an SL-PRS.

In some embodiments, the measurement information of the SL-PRS includes at least one of the following:

measurement information of full-sensing;
measurement information of partial-sensing or periodic-sensing;
measurement information of configured full-sensing measurement window; and
measurement information of re-evaluation or short-term-sensing.

In some embodiments, the first information includes at least one of the following sub-information:

SL-PRS received signal strength indication (RSSI);
SL-PRS reference signal receiving power (RSRP);
physical sidelink control channel (PSCCH) RSSI;
physical sidelink control channel reference signal receiving power (PSCCH RSRP);
sidelink received signal strength indication SL-RSSI;
sidelink reference signal receiving power (SL-RSRP);
physical sidelink shared channel received signal strength indication (PSSCH RSSI);
physical sidelink shared channel reference signal receiving power (PSSCH RSRP); and
SL-PRS pattern occupancy ratio.

In some embodiments, the first information includes at least two items of the sub-information;
the calculating a sidelink positioning reference signal (SL-PRS) channel busy rate according to first information, includes: calculating the SL-PRS channel busy rate according to the sub-information with the largest value among the at least two items of the sub-information.
In some embodiments, the first information is measured based on an SL-PRS dedicated resource pool.
In some embodiments, the first information is measured based on an SL-PRS shared resource pool;
the apparatus further includes:

a first measurement unit used to measure second information related to a sidelink channel busy rate in the SL-PRS shared resource pool;

wherein the calculating a sidelink positioning reference signal (SL-PRS) channel busy rate according to first information, includes:

calculating an SL-PRS candidate channel busy rate based on the first information;
calculating an SL channel busy rate based on the second information;
obtaining a maximum value of the SL-PRS candidate channel busy rate and the SL channel busy rate as the SL-PRS channel busy rate.

In some embodiments, the second information includes at least one of the following sub-information:

SL-PRS RSSI;
SL-PRS RSRP;
PSCCH RSSI;
PSCCH RSRP;
SL-RSSI;
SL-RSRP;
PSSCH RSSI;
PSSCH RSRP;
SL-PRS pattern occupancy ratio.

In some embodiments, the SL-PRS pattern occupancy ratio refers to a ratio between the number of first combs and the number of second combs in an SL-PRS comb pattern;

wherein the number of first combs refers to the number of occupied combs; and
the number of second combs refers to the number of all available combs.

In some embodiments, the first information is measured within a first sensing measurement window by the UE performing a full sensing operation;

or, the first information is measured within a second sensing measurement window by the UE performing a partial sensing operation or a periodic sensing operation;
or, the first information is measured within a third sensing measurement window by the UE performing a re-evaluation operation or a short-term sensing operation;
wherein the first sensing measurement window is a full sensing measurement window, the second sensing measurement window is a partial sensing measurement window or a periodic sensing measurement window, and the third sensing measurement window is a re-evaluation measurement window or a short-term sensing measurement window.

In some embodiments, the SL-PRS channel busy rate in slot or time n refers to a part of a first subchannel in the resource pool;

the first subchannel refers to a subchannel in which the first information measured by the UE exceeds a configured or preconfigured threshold value.

In some embodiments, the first information is obtained by periodical measurement in the first sensing measurement window, the second sensing measurement window or the third sensing measurement window; or, the first information is obtained via measurement triggered by SL-PRS transmission requirement information.

In some embodiments, the calculating a sidelink positioning reference signal (SL-PRS) channel busy rate according to first information, includes:

calculating the SL-PRS channel busy rate with a first formula; wherein the first formula is:

$$SL\_PRS\_CBR_n = \frac{N_{SC}}{N_{SC\_Total}} \times 100\% \,,$$

$SL\_PRS\_CBR_n$ represents an SL-PRS channel busy rate in slot or time n;
$N_{SC}$ represents the number of subchannels in which first information measured by the UE exceeds the configured or pre-configured threshold value;
$N_{SC\_Total}$ represents the total number of subchannels in the resource pool.

In some embodiments, the first information is measured in a first slot by the UE performing a partial sensing operation;

the first slot refers to a slot in which the UE performs reception of a physical sidelink control channel (PSCCH) and/or SL-PRS within a channel busy rate (CBR) measurement window.

In some embodiments, the calculating a sidelink positioning reference signal (SL-PRS) channel busy rate according to first information, includes:
calculating the SL-PRS channel busy rate according to the first information in a slot in which the first information is measured.

In some embodiments, the apparatus further includes:
a first processing unit used to use a configured or pre-configured first preset value as the SL-PRS channel busy rate, when the number of the first slots is less than a configured or pre-configured first threshold.

In some embodiments, the SL-PRS channel busy rate in slot or time n refers to a part of the second subchannel in the resource pool;

the second subchannel refers to a subchannel in which the first information measured by the UE exceeds the configured or pre-configured threshold value, and the first information is sensed and measured by the UE in K SL-PRS sensing occasions or periodic sensing occasions before the slot or time n; K is a natural number greater than or equal to 1.

In some embodiments, the K SL-PRS sensing occasions or periodic sensing occasions are occasions corresponding to all bits configured as 1 in corresponding high layer parameters.

In some embodiments, for each subchannel, a corresponding value of the first information is: an average value or maximum value of all measurement values of the first information in the K SL-PRS sensing occasions or periodic sensing occasions.

In some embodiments, the SL-PRS channel busy rate in slot or time n refers to a part of a third subchannel in the resource pool;

the third subchannel refers to a subchannel in which the first information measured by the UE exceeds the configured or preconfigured threshold value, and the first information is sensed and measured by the UE in all sensing occasions or periodic sensing occasions within a fourth sensing measurement window.

In some embodiments, a start time of a target time window is slot or time n-T, and an end time is slot or time n-1; the target time window is the first sensing measurement window, the second sensing measurement window, the third sensing measurement window, or the fourth sensing measurement window;

a value of T is configured by signaling notification, or the value of T is pre-configured; when the value of T is pre-configured, T is M×100ms or L×100 slots, where M and L are both positive integers greater than or equal to 1.

In some embodiments, for each subchannel, a corresponding value of the first information is an average value or maximum value of all measurement values of the first information in all sensing occasions or periodic sensing occasions within the fourth sensing measurement window.

In some embodiments, the apparatus further includes:

a first transmission unit used to transmit the SL-PRS channel busy rate and first indication information to a first device;
wherein the first device is a UE or a network device; the first indication information is used to indicate whether the SL-PRS channel busy rate is calculated for the SL-PRS dedicated resource pool or for the SL-PRS shared resource pool.

In some embodiments, the apparatus further includes:

a first determining unit used to determine an SL-PRS transmission parameter according to the SL-PRS channel busy rate;
wherein the SL-PRS transmission parameter includes: SL-PRS maximum transmission power, and/or, SL-PRS subchannel number range.

One embodiment of the present disclosure provides an information processing apparatus, applied to a first device, including:

a first receiving unit used to receive an SL-PRS channel busy rate and first indication information transmitted by a user equipment (UE);
wherein the first device is a UE or a network device, the first indication information is used to indicate whether the SL-PRS channel busy rate is calculated for an SL-PRS dedicated resource pool or for an SL-PRS shared resource pool.

In some embodiments, the apparatus further includes:

a first configuration unit used to configure a first sensing measurement window for the UE performing a full sensing operation, wherein the first sensing measurement window is a full sensing measurement window; or, configure a second sensing measurement window for the UE performing a partial sensing operation or a periodic sensing operation, wherein the second sensing measurement window is a partial sensing measurement window or a periodic sensing measurement window; or, configure a third sensing measurement window for the UE performing a re-evaluation operation or a short-term sensing operation, wherein the third sensing measurement window is a re-evaluation measurement window or a short-term sensing measurement window;
and/or, transmit a configured threshold value to the UE for the UE to obtain the first subchannel or the second subchannel or the third subchannel;
and/or, configure the first sensing measurement window, the second sensing measurement window or the third sensing measurement window periodically to the UE, thereby enabling the UE to periodically measure the first information in the first sensing measurement window, the second sensing measurement window or the third sensing measurement window;
and/or, configure a first threshold to the UE, thereby enabling the UE to use the configured or pre-configured first preset value as the SL-PRS channel busy rate when the number of first slots is less than the first threshold, wherein the first slot refers to a slot in which the UE receives PSCCH and/or SL-PRS within the channel busy rate CBR measurement window;
and/or, configure high layer parameters of SL-PRS sensing occasion or periodic sensing occasion to the UE, thereby enabling the UE to use occasions corresponding to all bits configured as 1 in the high layer parameters as K SL-PRS sensing occasions or periodic sensing occasions, wherein K is a natural number greater than or equal to 1.

In some embodiments, a start time of the target time window is slot or time n-T, and an end time is slot or time n-1; the target time window is the first sensing measurement window, the second sensing measurement window or the third sensing measurement window; a value of T is configured to the UE by the first device through signaling notification, or the value of T is pre-configured; when the value of T is pre-configured, T is M×100ms or L×100 slots, where M and L are both positive integers greater than or equal to 1.

One embodiment of the present disclosure provides a non-transitory readable storage medium, comprising a computer program stored thereon; wherein the computer program is used to cause a processor to execute the method on the UE side or on the first device side.

The beneficial effects of the above technical solutions in the present disclosure are as follows.

In the above solutions, according to the information processing method, by calculating the SL-PRS channel busy rate according to the first information, where the first information at least includes measurement information of an SL-PRS, it is capable of effectively obtaining the SL-PRS channel busy rate, and then supporting determination of appropriate SL-PRS transmission parameters based on this, thereby reducing the probability of SL-PRS transmission failure due to inappropriate SL-PRS transmission parameters and improving the SL-PRS transmission success rate. This effectively solves the problem in the related art where the SL-PRS channel busy rate cannot be accurately determined.

## BRIEF DESCRIPTION OF THE DRAWINGS

FIG. 1 is a schematic diagram of a wireless communication system architecture according to an embodiment of the present disclosure;
FIG. 2 is a schematic diagram of positioning by using a sidelink positioning reference signal (SL-PRS) according to an embodiment of the present disclosure;
FIG. 3 is a first flowchart of an information processing method according to an embodiment of the present disclosure;
FIG. 4 is a second flowchart of an information processing method according to an embodiment of the present disclosure;
FIG. 5 is a first schematic diagram of a specific implementation of an information processing method according to an embodiment of the present disclosure;
FIG. 6 is a second schematic diagram of a specific implementation of an information processing method according to an embodiment of the present disclosure;
FIG. 7 is a third schematic diagram of a specific implementation of an information processing method according to an embodiment of the present disclosure;
FIG. 8 is a fourth schematic diagram of a specific implementation of an information processing method according to an embodiment of the present disclosure;
FIG. 9 is a fifth schematic diagram of a specific implementation of an information processing method according to an embodiment of the present disclosure;
FIG. 10 is a sixth schematic diagram of a specific implementation of an information processing method according to an embodiment of the present disclosure;
FIG. 11 is a first schematic diagram of an information processing device according to an embodiment of the present disclosure;
FIG. 12 is a second schematic diagram of an information processing device according to an embodiment of the present disclosure;
FIG. 13 is a first schematic diagram of an information processing apparatus according to an embodiment of the present disclosure; and
FIG. 14 is a second schematic diagram of an information processing apparatus according to an embodiment of the present disclosure.

## DETAILED DESCRIPTION

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present application, the term "plurality" refers to two or more than two, and other quantifiers are similar.

It is to be noted here that the technical solution of the embodiment of the present disclosure may be applied to various systems, especially a 5G system. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE frequency division duplex (FDD), LTE time division duplex (TDD) system, long term evolution advanced (LTE-A) system, universal mobile telecommunication system (UMTS), worldwide interoperability for microwave access (WiMAX) system, or 5th-Generation (5G) New Radio (NR) system. Each of these systems includes a terminal device and a network device. Each system further includes a core network part, e.g., an Evolved Packet System (EPS) or 5G system (5GS/5GC).

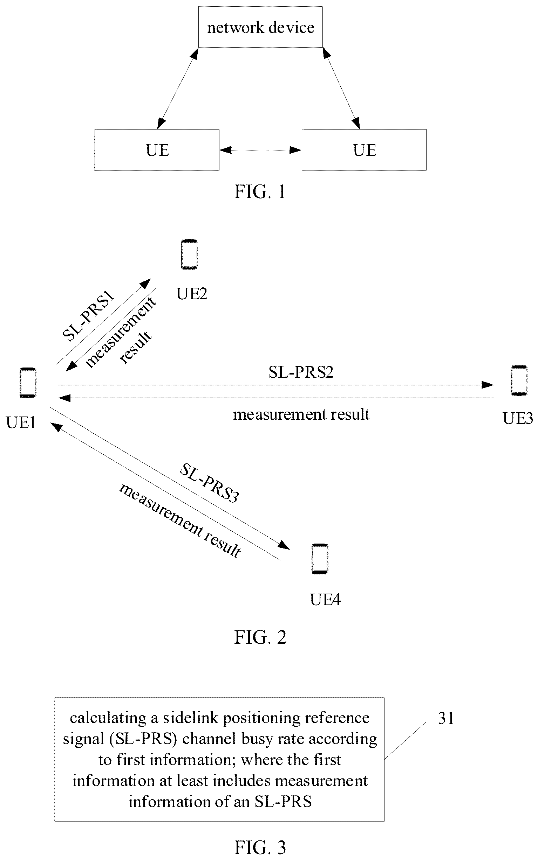

FIG. 1 shows a block diagram of a wireless communication system applicable to the embodiments of the present disclosure. The wireless communication system includes a terminal device (also referred to as a terminal) and a network device.

The terminal involved in the embodiments of the present disclosure may also be a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as user equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

The following first introduces the contents involved in the solution provided by the embodiment of the present disclosure.

As shown in FIG. 2, it is a schematic diagram showing that a UE 1 transmits sidelink positioning reference signals (SL-PRS) to UEs 2-4 to complete its own positioning procedure. The UE 1 uses time-frequency resources to transmit SL-PRS to the UEs 2 to 4 respectively (for example, as shown in the figure, transmitting SL-PRS1 to UE2, transmitting SL-PRS2 to UE3, and transmitting SL-PRS3 to UE4); after receiving the SL-PRS, the UEs 2 to 4 transmit measurement results to the UE1 to assist the UE1 in completing the positioning solution.

Specifically, before transmitting SL-PRS, the UE needs to first determine channel busy condition of SL-PRS in the resource pool, so as to determine time-frequency resources, transmission power and other parameters occupied by SL-PRS through the channel busy condition in the resource pool. Thus, it is still necessary to define and calculate an SL-PRS channel busy rate, so that the UE can select SL-PRS transmission parameters according to the SL-PRS channel busy rate. However, the SL-PRS channel busy rate is not defined at present, nor is it stipulated how the UE calculates the channel busy rate. As a result, UEs in full sensing or partial sensing cannot select appropriate SL-PRS transmission parameters according to the channel busy rate. Therefore, how to define a calculation manner of SL-PRS channel busy rate for UEs in full sensing or partial sensing, so as to effectively assist the UE in determining SL-PRS transmission parameters, is a key problem that needs to be solved.

In view of this, the embodiments of the present disclosure provide an information processing method, device and apparatus, which can solve the problem that the SL-PRS channel busy rate cannot be accurately determined in the related art. The method, device and apparatus are based on the same application concept. Since the principles of solving the problem by the method, device and apparatus are similar, the implementation of the method, device and apparatus can refer to each other, and the repeated parts will not be repeated.

An information processing method provided in one embodiment of the present disclosure is applied to a user equipment (UE), as shown in FIG. 3, and includes:

Step 31: calculating a sidelink positioning reference signal (SL-PRS) channel busy rate according to first information; where the first information at least includes measurement information of an SL-PRS.

In the information processing method provided in the embodiment of the present disclosure, by calculating the SL-PRS channel busy rate according to the first information, where the first information at least includes measurement information of an SL-PRS, it is capable of effectively obtaining the SL-PRS channel busy rate, and then supporting determination of appropriate SL-PRS transmission parameters based on this, thereby reducing the probability of SL-PRS transmission failure due to inappropriate SL-PRS transmission parameters and improving the SL-PRS transmission success rate. This effectively solves the problem in the related art where the SL-PRS channel busy rate cannot be accurately determined.

The measurement information of the SL-PRS includes at least one of the following: measurement information of full-sensing; measurement information of partial-sensing or periodic-sensing; measurement information of configured full-sensing measurement window; measurement information of re-evaluation or short-term-sensing.

This can support obtaining the SL-PRS channel busy rate based on a variety of measurement information.

In one embodiment of the present disclosure, the first information includes at least one of the following sub-information: SL-PRS received signal strength indication (RSSI); SL-PRS reference signal receiving power (RSRP); physical sidelink control channel (PSCCH) RSSI; physical sidelink control channel reference signal receiving power (PSCCH RSRP); sidelink received signal strength indication SL-RSSI; sidelink reference signal receiving power (SL-RSRP); physical sidelink shared channel received signal strength indication (PSSCH RSSI); physical sidelink shared channel reference signal receiving power (PSSCH RSRP); SL-PRS pattern occupancy ratio.

In this way, the specific first information can be clarified; it can also be understood that the above measurement information includes at least one of the above sub-information, but is not limited to this.

The first information includes at least two items of sub-information; the calculating a sidelink positioning reference signal (SL-PRS) channel busy rate according to first information, includes: calculating the SL-PRS channel busy rate according to the sub-information with the largest value among the at least two items of the sub-information.

In this way, the SL-PRS channel busy rate can be accurately obtained.

In one embodiment of the present disclosure, the first information may be measured based on an SL-PRS dedicated resource pool; it may also be understood that the first information may be measured within the SL-PRS dedicated resource pool.

In this way, calculation of the SL-PRS channel busy rate for the SL-PRS dedicated resource pool can be supported. The SL-PRS dedicated resource pool may be a sidelink positioning dedicated resource pool, but is not limited thereto.

The first information can be measured based on an SL-PRS shared resource pool (it can also be understood that the first information can be measured in the SL-PRS shared resource pool); the method further includes: measuring second information related to a sidelink (SL) channel busy rate in the SL-PRS shared resource pool. The calculating a sidelink positioning reference signal (SL-PRS) channel busy rate according to first information, includes: calculating an SL-PRS candidate channel busy rate based on the first information; calculating an SL channel busy rate based on the second information; obtaining a maximum value of the SL-PRS candidate channel busy rate and the SL channel busy rate as the SL-PRS channel busy rate.

In this way, the SL-PRS channel busy rate can be accurately obtained. The shared resource pool may be a resource pool shared by sidelink positioning and other purposes, and the other purposes may include sidelink data transmission, sidelink communication, etc., which are not limited here.

In one embodiment of the present disclosure, the second information includes at least one of the following sub-information: SL-PRS RSSI; SL-PRS RSRP; PSCCH RSSI; PSCCH RSRP; SL-RSSI; SL-RSRP; PSSCH RSSI; PSSCH RSRP; SL-PRS pattern occupancy ratio.

In this way, the specific first information can be clarified.

The SL-PRS pattern occupancy ratio refers to a ratio between the number of first combs and the number of second combs in an SL-PRS comb pattern; where the number of first combs refers to the number of occupied combs; and the number of second combs refers to the number of all available combs.

In this way, the specific SL-PRS pattern occupancy ratio can be clarified.

In one embodiment of the present disclosure, the first information is measured within a first sensing measurement window by the UE performing a full sensing operation; or, the first information is measured within a second sensing measurement window by the UE performing a partial sensing operation or a periodic sensing operation; or, the first information is measured within a third sensing measurement window by the UE performing a re-evaluation operation or a short-term sensing operation; where the first sensing measurement window is a full sensing measurement window, the second sensing measurement window is a partial sensing measurement window or a periodic sensing measurement window, and the third sensing measurement window is a re-evaluation measurement window or a short-term sensing measurement window.

In this way, the measurement of the first information can be carried out in different time windows by UEs performing different operations.

The SL-PRS channel busy rate in slot or time n refers to a part of a first subchannel in the resource pool; where the first subchannel refers to a subchannel in which the first information measured by the UE exceeds a configured or preconfigured threshold value.

In this way, the meaning of the SL-PRS channel busy rate can be defined.

In one embodiment of the present disclosure, the first information is obtained by periodical measurement in the first sensing measurement window, the second sensing measurement window or the third sensing measurement window; or, the first information is obtained via measurement triggered by SL-PRS transmission requirement information.

In this way, periodic measurement or aperiodic measurement of the first information can be achieved.

The calculating a sidelink positioning reference signal (SL-PRS) channel busy rate according to first information, includes: calculating the SL-PRS channel busy rate with a first formula; where the first formula is:

$$SL\_PRS\_CBR_n = \frac{N_{SC}}{N_{SC\_Total}} \times 100\% \quad ,$$

$SL\_PRS\_CBR_n$ represents an SL-PRS channel busy rate in slot or time n; $N_{SC}$ represents the number of subchannels in which first information measured by the UE exceeds the configured or pre-configured threshold value; $N_{SC\_Total}$ represents the total number of subchannels in the resource pool.

In this way, the SL-PRS channel busy rate can be accurately calculated. The resource pool may be a resource pool (including an SL-PRS dedicated resource pool or an SL-PRS shared resource pool) configured for the UE, but is not limited thereto.

In one embodiment of the present disclosure, the first information is measured in a first slot by the UE performing a partial sensing operation; where the first slot refers to a slot in which the UE performs reception of a physical sidelink control channel (PSCCH) and/or SL-PRS within a channel busy rate (CBR) measurement window.

In this way, the measurement of the first information can be implemented for the UE that performs the partial sensing operation. The CBR measurement window may correspond to the second sensing measurement window, but is not limited thereto.

The calculating a sidelink positioning reference signal (SL-PRS) channel busy rate according to first information, includes: calculating the SL-PRS channel busy rate according to the first information in a slot in which the first information is measured.

In this way, the SL-PRS channel busy rate can be accurately calculated.

Further, the information processing method further includes: when the number of the first slots is less than a configured or pre-configured first threshold, using a configured or pre-configured first preset value as the SL-PRS channel busy rate.

In this way, the accuracy of the obtained SL-PRS channel busy rate can be guaranteed to a certain extent.

The SL-PRS channel busy rate in the slot or time n refers to a part of the second subchannel in the resource pool; where the second subchannel refers to a subchannel in which the first information measured by the UE exceeds the configured or pre-configured threshold value, and the first information is sensed and measured by the UE in K SL-PRS sensing occasions or periodic sensing occasions before the slot or time n; K is a natural number greater than or equal to 1.

In this way, the meaning of the SL-PRS channel busy rate can be defined.

In one embodiment of the present disclosure, the K SL-PRS sensing occasions or periodic sensing occasions are occasions corresponding to all bits configured as 1 in corresponding high layer parameters.

In this way, K SL-PRS sensing occasions or periodic sensing occasions can be accurately obtained.

For each subchannel, the corresponding value of the first information is: an average value or maximum value of all measurement values of the first information in the K SL-PRS sensing occasions or periodic sensing occasions.

This can improve the accuracy of the corresponding value of the first information.

In one embodiment of the present disclosure, the SL-PRS channel busy rate in slot or time n refers to a part of a third subchannel in the resource pool; where the third subchannel refers to a subchannel in which the first information measured by the UE exceeds the configured or preconfigured threshold value, and the first information is sensed and measured by the UE in all sensing occasions or periodic sensing occasions within a fourth sensing measurement window.

In this way, the meaning of the SL-PRS channel busy rate can be defined.

A start time of a target time window is slot or time n-T, and an end time is slot or time n-1; the target time window is the first sensing measurement window, the second sensing measurement window, the third sensing measurement window, or the fourth sensing measurement window. The value of T is configured by signaling notification, or the value of T is pre-configured; when the value of T is pre-configured, T is M×100ms or L×100 slots, where M and L are both positive integers greater than or equal to 1.

In this way, the target time window can be accurately obtained.

In one embodiment of the present disclosure, for each subchannel, the corresponding value of the first information is an average value or maximum value of all measurement values of the first information in all sensing occasions or periodic sensing occasions within the fourth sensing measurement window.

This can improve the accuracy of the corresponding value of the first information.

Further, the information processing method further includes: transmitting the SL-PRS channel busy rate and first indication information to a first device; where the first device is a UE or a network device; the first indication information is used to indicate whether the SL-PRS channel busy rate is calculated for the SL-PRS dedicated resource pool or for the SL-PRS shared resource pool.

In this way, the first device can also accurately obtain the SL-PRS channel busy rate.

In the embodiment of the present disclosure, the information processing method further includes: determining an SL-PRS transmission parameter according to the SL-PRS channel busy rate; where the SL-PRS transmission parameter includes: SL-PRS maximum transmission power, and/or, SL-PRS subchannel number range.

In this way, appropriate SL-PRS transmission parameters can be accurately obtained.

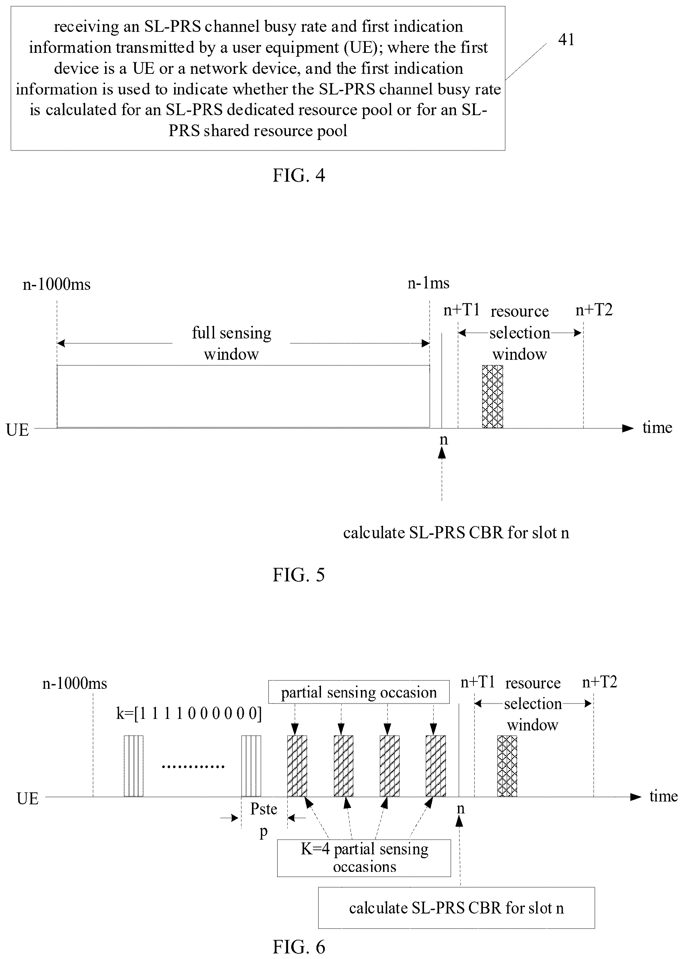

One embodiment of the present disclosure further provides an information processing method, which is applied to a first device, as shown in FIG. 4, and includes:

Step 41: receiving an SL-PRS channel busy rate and first indication information transmitted by a user equipment (UE); where the first device is a UE or a network device, and the first indication information is used to indicate whether the SL-PRS channel busy rate is calculated for an SL-PRS dedicated resource pool or for an SL-PRS shared resource pool.

In the information processing method provided in the embodiment of the present disclosure, by receiving the SL-PRS channel busy rate and the first indication information transmitted by the UE, where the first device is a UE or a network device, and the first indication information is used to indicate whether the SL-PRS channel busy rate is calculated for the SL-PRS dedicated resource pool or for the SL-PRS shared resource pool, the SL-PRS channel busy rate transmitted by the UE can be accurately obtained to support subsequent operations. This effectively solves the problem in the related art where the SL-PRS channel busy rate cannot be accurately determined.

Further, the information processing method further includes: configuring a first sensing measurement window for the UE performing a full sensing operation, where the first sensing measurement window is a full sensing measurement window; or, configuring a second sensing measurement window for the UE performing a partial sensing operation or a periodic sensing operation, where the second sensing measurement window is a partial sensing measurement window or a periodic sensing measurement window; or, configuring a third sensing measurement window for the UE performing a re-evaluation operation or a short-term sensing operation, where the third sensing measurement window is a re-evaluation measurement window or a short-term sensing measurement window;

and/or, transmitting a configured threshold value to the UE for the UE to obtain the first subchannel or the second subchannel or the third subchannel; and/or, configuring the first sensing measurement window, the second sensing measurement window or the third sensing measurement window periodically to the UE, so that the UE can periodically measure the first information in the first sensing measurement window, the second sensing measurement window or the third sensing measurement window; and/or, configuring a first threshold to the UE, so that the UE can use the configured or pre-configured first preset value as the SL-PRS channel busy rate when the number of first slots is less than the first threshold, where the first slot refers to a slot in which the UE receives PSCCH and/or SL-PRS within the channel busy rate CBR measurement window; and/or, configuring high layer parameters of SL-PRS sensing occasion or periodic sensing occasion to the UE, so that the UE can use occasions corresponding to all bits configured as 1 in the high layer parameters as K SL-PRS sensing occasions or periodic sensing occasions, where K is a natural number greater than or equal to 1.

In this way, the UE can accurately obtain information such as the first sensing measurement window, the second sensing measurement window, the third sensing measurement window, the configured threshold value, the first threshold value, and/or high layer parameters of the SL-PRS sensing occasion or the periodic sensing occasion, thereby accurately performing related operations.

The start time of the target time window is slot or time n-T, and the end time is slot or time n-1; the target time window is the first sensing measurement window, the second sensing measurement window or the third sensing measurement window; where the value of T is configured to the UE by the first device through signaling notification, or the value of T is pre-configured. When the value of T is pre-configured, T is M×100ms or L×100 slots, where M and L are both positive integers greater than or equal to 1.

This will allow the target time window to be clearly defined.

The information processing method provided in the embodiment of the present disclosure is described below with examples.

In view of the above technical problems, one embodiment of the present disclosure provides an information processing method, which can be specifically implemented as a method for determining (or calculating) a SL-PRS channel busy rate, which includes: calculating, by UE, an SL-PRS resource pool subchannel busy rate (i.e., SL-PRS CBR) based on at least one of measurement information of full sensing of the SL-PRS, measurement information of partial sensing or periodic sensing, measurement information of configured continuous sensing measurement window, and measurement information of re-evaluation or short-term sensing, thereby ensuring sidelink positioning. Specifically, with this method, the SL-PRS channel busy rate can be effectively calculated, and an appropriate SL-PRS transmission parameter can be determined according to the SL-PRS channel busy rate, thereby reducing the probability of SL-PRS transmission failure due to inappropriate SL-PRS transmission parameters, improving the SL-PRS transmission success rate, and better ensuring that the UE can perform sidelink positioning according to the SL-PRS. The UE can obtain SL-PRS configuration information of other UEs through partial sensing and periodic sensing, which is not limited thereto. When calculating the CBR, SL-PRS signals transmitted by the UE itself as well as SL-PRS signals transmitted by other UEs may be included, which is not limited thereto.

Specifically, this solution includes the following contents.

1. Method for calculating an SL-PRS channel busy rate.

(1) The UE measures first information and calculates the SL-PRS channel busy rate (corresponding to calculating the sidelink positioning reference signal SL-PRS channel busy rate according to the first information).

(2) The first information includes at least one of a sidelink positioning reference signal (SL-PRS) received signal strength indication (RSSI), a reference signal received power (SL-PRS RSRP), physical sidelink control channel (PSCCH) RSSI, PSCCH RSRP, SL-RSSI, SL-RSRP, physical sidelink shared channel (PSSCH) RSSI, PSSCH RSRP, SL-PRS pattern occupancy ratio (or SL-PRS pattern occupancy ratio) .

(3) The second information includes at least one of SL-PRS RSSI, SL-PRS RSRP, PSCCH RSSI, PSCCH RSRP, SL-RSSI, SL-RSRP, PSSCH RSSI, PSSCH RSRP, SL-PRS pattern occupancy ratio.

(4) The SL-PRS pattern occupancy ratio refers to a ratio between the number of occupied combs (corresponding to the above first number of combs) in an SL-PRS comb pattern and the number of all available combs (corresponding to the above second number of combs) (for example, an SL-PRS comb pattern includes 4 available combs, and the number of occupied combs is 1, then the SL-PRS pattern occupancy ratio is 25%).

(5) The UE calculates the SL-PRS channel busy rate by using the maximum value of at least two of SL-PRS RSSI, SL-PRS RSRP, PSCCH RSSI, PSCCH RSRP, SL-RSSI, SL-RSRP, PSSCH RSSI, PSSCH RSRP (corresponding to that the first information includes at least two of sub-information, the SL-PRS channel busy rate is calculated according to the sub-information with the largest value among the at least two of the sub-information).

(6) In the SL-PRS dedicated resource pool, the UE measures first information and calculates an SL-PRS channel busy rate (corresponding to that the first information is measured in the SL-PRS dedicated resource pool).

(7) In the SL-PRS shared resource pool, the UE measures first information (corresponding to that the first information is measured in the SL-PRS shared resource pool), and calculates the SL-PRS channel busy rate (corresponding to the above SL-PRS candidate channel busy rate). Meanwhile, the UE measures second information, calculates an SL channel busy rate, and uses a maximum value between the SL-PRS channel busy rate and the SL channel busy rate as the final SL-PRS channel busy rate (corresponding to that the maximum value between the SL-PRS candidate channel busy rate and the SL channel busy rate is obtained as the SL-PRS channel busy rate).

(8) The UE transmits the measured SL-PRS channel busy rate to other UEs, base stations or positioning management functions (LMF), and indicates whether the SL-PRS channel busy rate is measured in the SL-PRS dedicated resource pool or in the SL-PRS shared resource pool (corresponding to the above transmission of the SL-PRS channel busy rate and the first indication information to the first device). The other UE may be a head node responsible for SL-PRS resource allocation. The UE transmits the CBR to the head node to assist the head node in resource allocation, which is not limited thereto.

2. Full sensing measurement result (taking SL-PRS RSSI as an example).

(9) The UE performing a full sensing operation, measures first information within a measurement window [n-T, n-1] (corresponding to the above first sensing measurement window) for calculating the channel busy rate.

(10) The SL-PRS channel busy rate at slot or time n refers to a ratio of the number of subchannels in which SL-PRS RSSI sensed and measured by the UE within the [n-T, n-1] measurement window exceeds the (pre) configured threshold value to the total number of subchannels in the resource pool; which is corresponding to that an SL-PRS channel busy rate at slot or time n refers to a part of the first subchannel in the resource pool, or the SL-PRS channel busy rate at slot or time n refers to a corresponding part of the first subchannel in the resource pool, or the SL-PRS channel busy rate at slot or time n refers to a corresponding part of the first subchannel in the resource pool; where the first subchannel refers to a subchannel in which first information measured by the UE exceeds the configured or pre-configured threshold value.

(11) The value of T is configured through signaling notification, or the value of T is preconfigured. When the value of T is preconfigured, T is M×100ms or L×100 slots, where M and L (both) are positive integers greater than or equal to 1.

(12) Configuring a periodic SL-PRS channel busy rate measurement window: the UE periodically performs SL-PRS channel busy rate measurement within the measurement window, which are corresponding to that the corresponding first information is periodically measured within the first sensing measurement window.

(13) Non-periodic SL-PRS channel busy rate measurement window: the channel busy rate measurement window is triggered by the SL-PRS transmission demand, which are corresponding to that the first information is obtained via measurement triggered by SL-PRS transmission requirement information.

(14) The calculation formula for the SL-PRS channel busy rate $SL\_PRS\_CBR_n$ of the UE at slot or time n is as follows (corresponding to the above calculation of the SL-PRS channel busy rate by using the first formula above):

$$SL\_PRS\_CBR_n = \frac{N_{SC\_SL\_PRS\_RSSI}}{N_{SC\_Total}} \times 100\%;$$

$N_{SC\_SL\_PRS\_RSSI}$ represents the number of subchannels in the resource pool for which SL-PRS RSSI exceeds a (pre) configured threshold; that is, the number of subchannels in which first information measured by the UE exceeds the configured or pre-configured threshold value;

$N_{SC\_Total}$ represents the total number of subchannels in the resource pool.

3. Processing method for partial sensing (taking SL-PRS RSSI as an example of measurement information)

(15) When the UE is configured to perform partial sensing, an SL-PRS RSSI is measured in the a slot (in which the UE performs partial sensing within the CBR measurement window and the UE performs reception of PSCCH or SL-PRS); this is corresponding to that the first information is measured in a first slot by the UE performing the partial sensing operation; where the first slot refers to a slot in which the UE performs reception of physical sidelink control channel (PSCCH) and/or SL-PRS within the channel busy rate CBR measurement window.

(16) The calculation of SL-PRS CBR is limited to the slot for measuring SL-PRS RSSI (i.e., CBR is calculated in the slot for measuring SL-PRS RSSI); this is corresponding to that in a slot for measuring the first information, the SL-PRS channel busy rate is calculated according to the first information.

(17) If the number of SL-PRS RSSI measurement slots within the CBR measurement window is lower than the (pre) configured threshold (corresponding to the above first threshold), the (pre) set SL-PRS CBR value (corresponding to the above first preset value) is used; this is corresponding to the above case where when the number of the first slots is less than the configured or preconfigured first threshold, the configured or pre-configured first preset value is used as the SL-PRS channel busy rate.

4. Measurement results of K partial sensing occasions (a partial sensing occasion configured as 1 in the sensing window, and the measurement information takes SL-PRS RSSI as an example)

(18) The SL-PRS channel busy rate at slot or time n refers to a ratio of the number of subchannels in which SL-PRS RSSI sensed and measured by the UE during K SL-PRS partial sensing occasions or periodic sensing occasions before the slot or time n, exceeds the (pre) configured threshold value, to the total number of subchannels in the resource pool; this is corresponding to that the SL-PRS channel busy rate at slot or time n refers to a part of the second subchannel in the resource pool, where the second subchannel refers to a subchannel in which first information measured by the UE exceeds the configured or pre-configured threshold value, and the first information is sensed and measured by the UE during the K SL-PRS sensing occasions or periodic sensing occasions before the slot or time n; K is a natural number greater than or equal to 1.

K is a natural number greater than or equal to 1, and the K SL-PRS partial sensing occasions or periodic sensing occasions are determined by the high layer configuration parameters of the partial sensing or periodic sensing occasions. That is, the K SL-PRS partial sensing occasions or periodic sensing occasions are the partial sensing occasions and periodic sensing occasions corresponding to all bits configured as 1 in the high layer parameters (corresponding to that the K SL-PRS sensing occasions or periodic sensing occasions are occasions corresponding to all bits configured as 1 in the corresponding high layer parameters). This (18) can be used in combination with the above (14), but is not limited thereto.

(19) The SL-PRS RSSI is an average value of measurements performed by the UE in K partial sensing occasions or periodic sensing occasions (that is, for one subchannel, the SL-PRS RSSI refers to an average value of SL-PRS RSSI measurement values in these occasions; this is corresponding to that for each subchannel, the corresponding value of the first information is an average value of all measurement values of the first information in the K SL-PRS sensing occasions or periodic sensing occasions), that is:

$$SL\_PRS\_RSSI = \frac{\sum_{i=1}^{K} SL\_PRS\_RSSI_i}{K};$$

where K is the total number of partial sensing or periodic sensing occasions measured by the UE; K≥ 1;
$SL\_PRS\_RSSI_i$ is an SL-PRS RSSI measured at an i-th partial sensing occasion or periodic sensing occasion.

(20) The SL-PRS RSSI is the maximum value of measurements performed by the UE in K partial sensing occasions or periodic sensing occasions (that is, for one subchannel, the SL-PRS RSSI refers to the maximum value of the SL-PRS RSSI measurement values in these occasions; this is corresponding to that for each subchannel, the corresponding value of the first information is a maximum value of all measurement values of the first information in the K SL-PRS sensing occasions or periodic sensing occasions), that is:

$$SL\_PRS\_RSSI = \max_{1 \le i \le K} SL\_PRS\_RSSI_i$$

where K is the total number of partial sensing or periodic sensing occasions measured by the UE; K≥1;
$SL\_PRS\_RSSI_i$ is an SL-PRS RSSI measured at an i-th partial sensing occasion or periodic sensing occasion.

5. Measurement results of all partial sensing occasions within a T period (all partial sensing occasions within the sensing window, measurement information takes SL-PRS RSSI as an example)

(21) The SL-PRS channel busy rate at slot or time n refers to a ratio of the number of subchannels in which SL-PRS RSSI sensed and measured by the UE at all partial sensing occasions or periodic sensing occasions within the [n-T, n-1] time period (corresponding to the above fourth sensing measurement window) exceeds the (pre) configured threshold value, to the total number of subchannels in the resource pool; this is corresponding to that he SL-PRS channel busy rate at slot or time n refers to a part of the third subchannel in the resource pool; where the third subchannel refers to a subchannel in which first information measured by the UE exceeds the configured or pre-configured threshold value, and the first information is sensed and measured by the UE at all sensing occasions or periodic sensing occasions within the fourth sensing measurement window.
(22) The value of T is configured by signaling notification, or the value of T is preconfigured. When the value of T is preconfigured, T is M×100ms or L×100 slots, where M and L (both) are positive integers greater than or equal to 1.
(23) The SL-PRS RSSI is an average value of measurements in all X partial sensing occasions or periodic sensing occasions measured by the UE in the [n-T, n-1] time period (that is, for one subchannel, the SL-PRS RSSI refers to an average value of SL-PRS RSSI measurement values in these occasions; this is corresponding to that for each subchannel, the corresponding value of the first information is an average value of all measurement values of the first information in all sensing occasions or periodic sensing occasions in the fourth sensing measurement window), that is:

$$SL\_PRS\_RSSI = \frac{\sum_{j=1}^{X} SL\_PRS\_RSSI_i}{X}$$

where X is the total number of partial sensing or periodic sensing occasions measured by the UE; X≥ 1;
$SL\_PRS\_RSSI_i$ is an SL-PRS RSSI measured at an i-th partial sensing occasion or periodic sensing occasion.
(24) The SL-PRS RSSI is a maximum value of measurements at X partial sensing occasions or periodic sensing occasions measured by the UE in the [n-T, n-1] time period (that is, for one subchannel, the SL-PRS RSSI refers to the maximum value of the SL-PRS RSSI measurement values in these occasions; this is corresponding to that for each subchannel, the corresponding value of the first information is a maximum value of all measurement values of the first information in all sensing occasions or periodic sensing occasions in the fourth sensing measurement window), that is:

$$SL\_PRS\_RSSI = \max_{1 \le i \le X} SL\_PRS\_RSSI_i$$

where X is the total number of partial sensing or periodic sensing occasions measured by the UE; X≥ 1;

SL_PRS_RSSI$_i$ is an SL-PRS RSSI measured at an i-th partial sensing occasion or periodic sensing occasion.

The above (15)-(24) are all for "measurement information of partial sensing or periodic sensing".

6. Configuring a continuous sensing measurement window for the UE that performs partial sensing (the measurement information takes SL-PRS RSSI as an example)

(25) A continuous sensing SL-PRS measurement window [n-T, n-1] (corresponding to the second sensing measurement window) is configured for the UE that performs partial sensing or periodic sensing, for measuring the SL-PRS channel busy rate.

(26) The SL-PRS channel busy rate at slot or time n refers to a ratio of the number of subchannels in which SL-PRS RSSI measured by the UE during SL-PRS sensing within the [n-T, n-1] measurement window exceeds the (pre) configured threshold value, to the total number of subchannels in the resource pool; this is corresponding to that the SL-PRS channel busy rate at slot or time n refers to a part of the first subchannel in the resource pool; where the first subchannel refers to a subchannel in which first information measured by the UE exceeds the configured or pre-configured threshold value.

(27) The value of T is configured by signaling notification, or the value of T is preconfigured. When the value of T is preconfigured, T is M×100ms or L×100 slots, where M and L are positive integers greater than or equal to 1.

(28) Configuring a periodic SL-PRS channel busy rate measurement window: the UE periodically performs SL-PRS channel busy rate measurement within the measurement window; this is corresponding to that the first information is periodically measured within the second sensing measurement window.

(29) Non-periodic SL-PRS channel busy rate measurement window: the channel busy rate measurement window is triggered by the SL-PRS transmission demand; this is corresponding to that the first information is obtained via measurement triggered by SL-PRS transmission requirement information.

7. Re-evaluation or short-term sensing is used to measure the channel busy rate (taking SL-PRS RSSI as an example of measurement information);

(30) The SL-PRS channel busy rate at slot or time n refers to a ratio of the number of subchannels in which SL-PRS RSSI measured by the UE after re-evaluation or short-term sensing within the [n-T, n-1] time period (corresponding to the above third sensing measurement window) exceeds the (pre) configured threshold value, to the total number of subchannels in the resource pool; this is corresponding to the above that the SL-PRS channel busy rate at slot or time n refers to a part of the first subchannel in the resource pool; where the first subchannel refers to a subchannel in which first information measured by the UE exceeds the configured or pre-configured threshold value.

8. Application of channel busy rate (corresponding to the above "determining AN appropriate SL-PRS transmission parameter")

(31) The UE determines at least one parameter (of SL-PRS transmission) of maximum SL-PRS transmission power and the range of the number of SL-PRS subchannels, according to the obtained SL-PRS channel busy rate; this is corresponding to the above determination of the SL-PRS transmission parameters according to the SL-PRS channel busy rate.

The present solution is specifically described hereinafter with examples (taking calculation of an SL-PRS channel busy rate of slot n as an example).

Example 1 (measurement result of full sensing occasions, measurement information takes SL-PRS RSSI as an example)

This example scenario involves:

1) The UE calculates an SL-PRS channel busy rate based on measurement information of SL-PRS full sensing; then determines SL-PRS transmission parameters based on the SL-PRS channel busy rate, so that the UE performs sidelink positioning based on the SL-PRS.

2) The UE performing the full sensing operation measures the first information within the [n-T, n-1] measurement window for calculating the channel busy rate.

3) The SL-PRS channel busy rate in slot n refers to a ratio of the number of subchannels in which SL-PRS RSSI sensed and measured by the UE within the [n-T, n-1] measurement window exceeds the (pre) configured threshold value, to the total number of subchannels in the resource pool.

4) The value of T is configured by signaling notification, or the value of T is preconfigured. When the value of T is preconfigured, T is M×100ms or L×100 slots, where M and L are positive integers greater than or equal to 1.

5) Configuring a periodic SL-PRS channel busy rate measurement window: the UE periodically performs SL-PRS channel busy rate measurement within the measurement window.

6) Non-periodic SL-PRS channel busy rate measurement window: the channel busy rate measurement window is triggered by the SL-PRS transmission demand.

7) The calculation formula of SL-PRS channel busy rate SL_PRS_CBR$_n$ of UE in slot n is as follows:

$$SL\_PRS\_CBR_n = \frac{N_{SC\_SL\_PRS\_RSSI}}{N_{SC\_Total}} \times 100\%$$

Where $N_{SC\_SL\_PRS\_RSSI}$ represents the number of subchannels in which SL-PRS RSSI exceeds the (pre) configured threshold in the resource pool;

$N_{SC\_Total}$ represents the total number of subchannels in the resource pool.

Specifically, in order to calculate an SL-PRS channel busy rate in slot n, the UE senses all SL-PRS transmissions in the [n-T, n-1] period. During the sensing process, the UE measures SL-PRS RSSI of all subchannels in the configured resource pool (i.e. configured for the UE), and the ratio of the number of subchannels in which SL-PRS RSSI exceeds the (pre-configured) configured threshold value to the number of all subchannels in the resource pool is the SL-PRS channel busy rate of the UE in the slot n.

As shown in FIG. 5 (which is a schematic diagram of SL-PRS channel busy rate (full sensing measurement)), T=1000ms. In order to calculate a channel busy rate of slot n, the UE senses all SL-PRS transmissions in the [n-1000 ms, n-1 ms] period, and measures SL-PRS RSSI of all subchannels in the resource pool in all slots within the period, and then determines whether the SL-PRS RSSI of these subchannels exceeds the (pre) configured threshold value. The ratio of the number of subchannels in which SL-PRS RSSI exceeds the threshold value to the total number of all subchannels in the resource pool is the SL-PRS channel busy rate of the UE in the slot n. T1 and T2 in FIG. 5 represent durations.

In view of the above, this example adopts this method of calculating the channel busy rate based on the measurement information of full sensing, so that the UE can calculate the SL-PRS resource pool subchannel busy rate, thereby ensuring the sidelink positioning. With this method, the SL-PRS channel busy rate can be effectively calculated, and the appropriate SL-PRS transmission parameters can be determined based on the SL-PRS channel busy rate, thereby reducing the probability of SL-PRS transmission failure due to inappropriate SL-PRS transmission parameters and improving the SL-PRS transmission success rate.

Example 2 (measurement results of K partial sensing occasions (partial sensing occasions configured as 1 in the sensing window), the measurement information takes SL-PRS RSSI as an example).

This example scenario involves:

1) The UE calculates an SL-PRS channel busy rate based on measurement information of partial sensing or periodic sensing of the SL-PRS; then determines SL-PRS transmission parameters based on the SL-PRS channel busy rate, so that the UE performs sidelink positioning based on the SL-PRS.

2) The SL-PRS channel busy rate in slot n refers to a ratio of the number of subchannels in which SL-PRS RSSI sensed and measured by the UE in the K SL-PRS partial sensing occasions or periodic sensing occasions before the slot n exceeds the (pre) configured threshold value, to the total number of subchannels in the resource pool, where K is a natural number greater than or equal to 1.

3) The K SL-PRS partial sensing occasions or periodic sensing occasions are determined by high layer configuration parameters of the partial sensing or periodic sensing occasions. That is, the K SL-PRS partial sensing occasions or periodic sensing occasions are partial sensing occasions and periodic sensing occasions corresponding to all bits configured as 1 in the high layer parameters.

4) The formula for calculating SL-PRS channel busy rate SL_PRS_CBR$_n$ of UE in the slot n is as follows:

$$SL\_PRS\_CBR_n = \frac{N_{SC\_SL\_PRS\_RSSI}}{N_{SC\_Total}} \times 100\%;$$

where $N_{SC\_SL\_PRS\_RSSI}$ represents the number of subchannels in which SL-PRS RSSI exceeds the (pre) configured threshold in the resource pool;

$N_{SC\_Total}$ represents the total number of subchannels in the resource pool.

5) The above SL-PRS RSSI is an average value of measurements performed by the UE in K partial sensing occasions or periodic sensing occasions, that is:

$$SL\_PRS\_RSSI = \frac{\sum_{i=1}^{K} SL\_PRS\_RSSI_i}{K};$$

where K is the total number of partial sensing or periodic sensing occasions measured by the UE; K≥1;

$SL\_PRS\_RSSI_i$ is an SL-PRS RSSI measured at an i-th partial sensing occasion or periodic sensing occasion.

or, the SL-PRS RSSI is a maximum value of measurements performed by the UE in K partial sensing occasions or periodic sensing occasions, that is:

$$\text{SL\_PRS\_RSSI} = \max_{1 \le i \le K} \text{SL\_PRS\_RSSI}_i;$$

where K is the total number of partial sensing or periodic sensing occasions measured by the UE; $K \ge 1$;
$\text{SL\_PRS\_RSS}_i$ is an SL-PRS RSSI measured at an i-th partial sensing occasion or periodic sensing occasion.

Specifically, in order to calculate the SL-PRS channel busy rate in the slot n, the UE senses the K SL-PRS partial sensing occasions or periodic sensing occasions before the slot n. During the sensing process, the UE measures SL-PRS RSSI of all subchannels in its configured resource pool (i.e., measuring all subchannels in partial occasions), and a ratio of the number of subchannels in which SL-PRS RSSI exceeds the (pre) configured threshold value to the number of all subchannels in the resource pool is the SL-PRS channel busy rate of the UE in the slot n. The K SL-PRS partial sensing occasions or periodic sensing occasions are determined by the high layer configuration parameters of the partial sensing or periodic sensing occasions, that is, the K SL-PRS partial sensing occasions or periodic sensing occasions are partial sensing occasions and periodic sensing occasions corresponding to all bits configured as 1 in the high layer parameters.

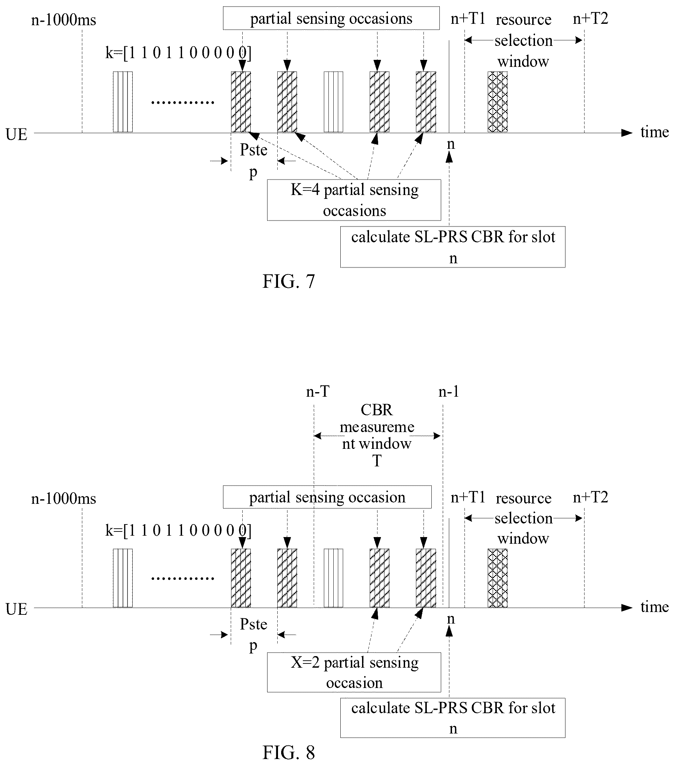

As shown in FIG. 6 and FIG. 7 (which are schematic diagrams of obtaining a channel busy rate via measurement performed according to K partial sensing occasions or periodic sensing occasions), in order to calculate the SL-PRS channel busy rate of slot n, the UE senses K=4 SL-PRS partial sensing occasions before the slot n, and measures SL-PRS RSSI of all subchannels in these 4 partial sensing occasions, and then determines whether the SL-PRS RSSI of these subchannels exceeds the (pre) configured threshold value, and a ratio of the number of subchannels in which SL-PRS RSSI exceeds the threshold value to the total number of all subchannels in the resource pool is the SL-PRS channel busy rate of the UE in the slot n. $P_{step}$ in the figure represents an occasion gap.

It is to be noted that the partial sensing or periodic sensing occasion within the resource sensing window [n-1000ms, n] is determined by a k-th bit of the high layer parameter. As shown in FIG. 6, for k= [1111000000], all consecutive K=4 SL-PRS partial sensing occasions corresponding to k=1 are enabled, allowing for SL-PRS resource sensing. However, as shown in FIG. 7, for k=[1101100000], all enabled K=4 SL-PRS partial sensing occasions corresponding to k=1 are non-consecutive, and thus it is necessary to select all K=4 partial sensing occasions corresponding to k=1 for SL-PRS resource sensing.

In view of the above, this example adopts the method of calculating the SL-PRS channel busy rate based on K SL-PRS partial sensing occasions or periodic sensing occasions, which can enable the UE that cannot perform full sensing but can only perform partial sensing or periodic sensing occasions to effectively calculate the SL-PRS channel busy rate, and determine the appropriate SL-PRS transmission parameters based on the SL-PRS channel busy rate, thereby reducing the probability of SL-PRS transmission failure due to inappropriate SL-PRS transmission parameters and improving the SL-PRS transmission success rate.

Example 3 (measurement results (full measurement) of all partial sensing occasions within a T period, the measurement information takes SL-PRS RSSI as an example)

This example scenario involves:

1) The UE calculates an SL-PRS channel busy rate based on the measurement information of partial sensing or periodic sensing of the SL-PRS; then determines the SL-PRS transmission parameters based on the SL-PRS channel busy rate, so that the UE performs sidelink positioning based on the SL-PRS.
2) The channel busy rate in slot n refers to a ratio of the number of subchannels in which SL-PRS RSSI sensed and measured by the UE at all SL-PRS partial sensing occasions or periodic sensing occasions within the [n-T, n-1] time period exceeds the (pre) configured threshold value, to the total number of subchannels in the resource pool; and the corresponding bits of these partial sensing occasions or periodic sensing occasions in the high layer configuration parameters of the partial sensing or periodic sensing are configured to 1.
3) The value of T is configured by signaling notification, or the value of T is preconfigured. When the value of T is preconfigured, T is $M \times 100$ms or $L \times 100$ slots, where M and L are positive integers greater than or equal to 1.
4) The above SL-PRS RSSI is an average value of measurements of all X partial sensing occasions or periodic sensing occasions measured by the UE in the [n-T, n-1] period, that is:

$$\text{SL\_PRS\_RSSI} = \frac{\sum_{i=1}^{X} \text{SL\_PRS\_RSSI}_i}{X};$$

where X is the total number of partial sensing or periodic sensing occasions measured by the UE; $X \ge 1$;
$\text{SL\_PRS\_RSSI}_i$ is an SL-PRS RSSI measured at an i-th partial sensing occasion or periodic sensing occasion.
or, the SL-PRS RSSI is a maximum value of measurements in X partial sensing occasions or periodic sensing occasions measured by the UE in the [n-T, n-1] period, that is:

$$SL\_PRS\_RSSI = \max_{1 \le i \le X} SL\_PRS\_RSSI_i;$$

where X is the total number of partial sensing or periodic sensing occasions measured by the UE; $X \ge 1$;

$SL\_PRS\_RSSI_i$ is an SL-PRS RSSI measured at an i-th partial sensing occasion or periodic sensing occasion.

Specifically, in order to calculate the SL-PRS channel busy rate in the slot n, the UE senses all SL-PRS partial sensing occasions or periodic sensing occasions in the [n-T, n-1] time period. During the sensing process, the UE measures SL-PRS RSSI of all subchannels in its configured resource pool, and the ratio of the number of subchannels in which SL-PRS RSSI exceeds the (pre) configured threshold value to the number of all subchannels in the resource pool is the SL-PRS channel busy rate of the UE in the slot n. The SL-PRS partial sensing occasion or periodic sensing occasion is determined by the high layer configuration parameters of the partial sensing or periodic sensing occasion, that is, these K partial sensing occasions or periodic sensing occasions are partial sensing occasions and periodic sensing occasions corresponding to all bits configured as 1 in the high layer parameters.

As shown in FIG. 8 (which is a schematic diagram of obtaining an SL-PRS channel busy rate via measurement performed at all SL-PRS partial sensing occasions or periodic sensing occasions in the [n-T, n-1] time period), in order to calculate the SL-PRS channel busy rate of the slot n, the UE senses the SL-PRS partial sensing occasions in the [n-T, n-1] time period, and measures SL-PRS RSSI of all subchannels in these X=2 partial sensing occasions, and then determines whether the SL-PRS RSSI of these subchannels exceeds the (pre) configured threshold value, and the ratio of the number of subchannels in which SL-PRS RSSI exceeds the threshold value to the total number of all subchannels in the resource pool is the SL-PRS channel busy rate of the UE in the slot n.

It is to be noted that the SL-PRS partial sensing or periodic sensing occasion within the resource sensing window [n-T, n-1] is determined by the k-th bit of the high layer parameter. As shown in FIG. 8, k=[1101100000], so there are only 2 SL-PRS partial sensing or periodic sensing occasions within the [n-T, n-1] period, and then it is necessary to select (within the time window T) all X=2 partial sensing occasions corresponding to k=1 for resource sensing.

In view of the above, this example adopts the method of calculating the channel busy rate based on all SL-PRS partial sensing occasions or periodic sensing occasions in the [n-T, n-1] time period, which can enable the UE that cannot perform full sensing but can only perform partial sensing or periodic sensing occasions to effectively calculate the SL-PRS channel busy rate, and determine the appropriate SL-PRS transmission parameters based on the SL-PRS channel busy rate, thereby reducing the probability of SL-PRS transmission failure due to inappropriate SL-PRS transmission parameters and improving the SL-PRS transmission success rate.

Example 4 (configuring a continuous sensing SL-PRS measurement window for a UE that performs partial sensing, and taking SL-PRS RSSI as an example of measurement information)

This example scenario involves:

1) The UE calculates an SL-PRS channel busy rate based on measurement information of the configured continuous sensing measurement window; then determines SL-PRS transmission parameters based on the SL-PRS channel busy rate, so that the UE performs sidelink positioning based on the SL-PRS.

2) One continuous sensing SL-PRS measurement window [n-T, n-1] configured for the UE that performs partial or periodic sensing of SL-PRS, is used for measuring the SL-PRS channel busy rate.

3) The SL-PRS channel busy rate in slot n refers to a ratio of the number of subchannels in which SL-PRS RSSI sensed and measured by the UE within the [n-T, n-1] measurement window exceeds the (pre) configured threshold value to the total number of subchannels in the resource pool.

4) The value of T is configured by signaling notification, or the value of T is preconfigured. When the value of T is preconfigured, T is M×100ms or L×100 slots, where M and L are positive integers greater than or equal to 1.

5) A periodic channel busy rate measurement window is configured: the UE periodically performs channel busy rate measurement within the measurement window.

6) Non-periodic channel busy rate measurement window: the channel busy rate measurement window is triggered by the SL-PRS transmission demand.

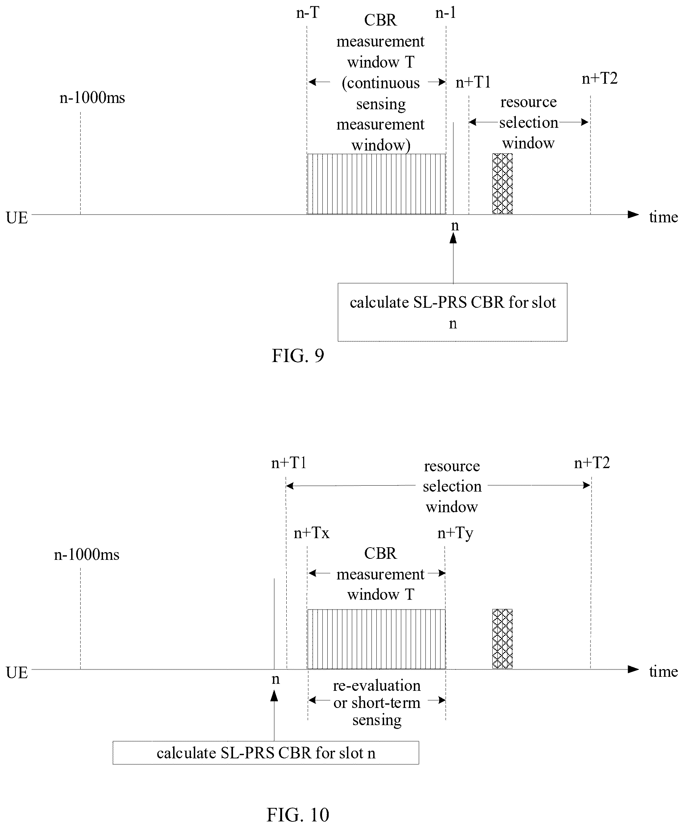

As shown in FIG. 9 (which is a schematic diagram of obtaining an SL-PRS channel busy rate based on the continuous sensing measurement window), for non-periodic continuous sensing measurement quantities, it is assumed that the UE can predict the data arrival time n in advance, then the UE can pre-configure a continuous sensing SL-PRS measurement window before the time n, and then the UE measures the SL-PRS channel busy rate according to the continuous sensing SL-PRS measurement window (i.e., measurement window T) shown in FIG. 9.

In view of the above, this example adopts the method of calculating the SL-PRS channel busy rate according to the configured continuous sensing measurement window, which can enable the UE that cannot perform full sensing but can only perform partial sensing or periodic sensing to effectively calculate the SL-PRS channel busy rate, and determine appropriate SL-PRS transmission parameters based on the SL-PRS channel busy rate, thereby reducing the probability of SL-PRS transmission failure due to inappropriate SL-PRS transmission parameters and improving the SL-PRS transmission success rate.

Example 5 (using re-evaluation or short-term sensing for measurement, the measurement information takes SL-PRS RSSI as an example)

This example scenario involves:

1) The UE calculates an SL-PRS channel busy rate based on the measurement information of re-evaluation or short-term sensing, and then determines parameters of SL-PRS transmission based on the SL-PRS channel busy rate, so that the UE performs sidelink positioning based on SL-PRS.

2) The SL-PRS channel busy rate in slot n refers to, after re-evaluation or short-term sensing during the [n+Tx, n+Ty] period, a ratio of the number of subchannels in which SL-PRS RSSI measured by the UE exceeds the (pre-) configured threshold value to the total number of subchannels in the resource pool.

As shown in FIG. 10, calculation of the SL-PRS channel busy rate of the slot n requires using measurement information of the re-evaluation or short-term sensing after the slot n to complete the SL-PRS RSSI measurement. $T_x$ and $T_y$ in FIG. 10 represent durations.

In view of the above, this example adopts the method of calculating the SL-PRS channel busy rate based on the measurement information of re-evaluation or short-term sensing, which can enable the UE that cannot perform full sensing and can only perform re-evaluation or short-term sensing to effectively calculate the SL-PRS channel busy rate, and determine the appropriate SL-PRS transmission parameters based on the SL-PRS channel busy rate, thereby reducing the probability of SL-PRS transmission failure due to inappropriate SL-PRS transmission parameters and improving the SL-PRS transmission success rate.

It should be noted that the relevant contents of the above examples can be referenced to each other, and the repeated contents will not be repeated.

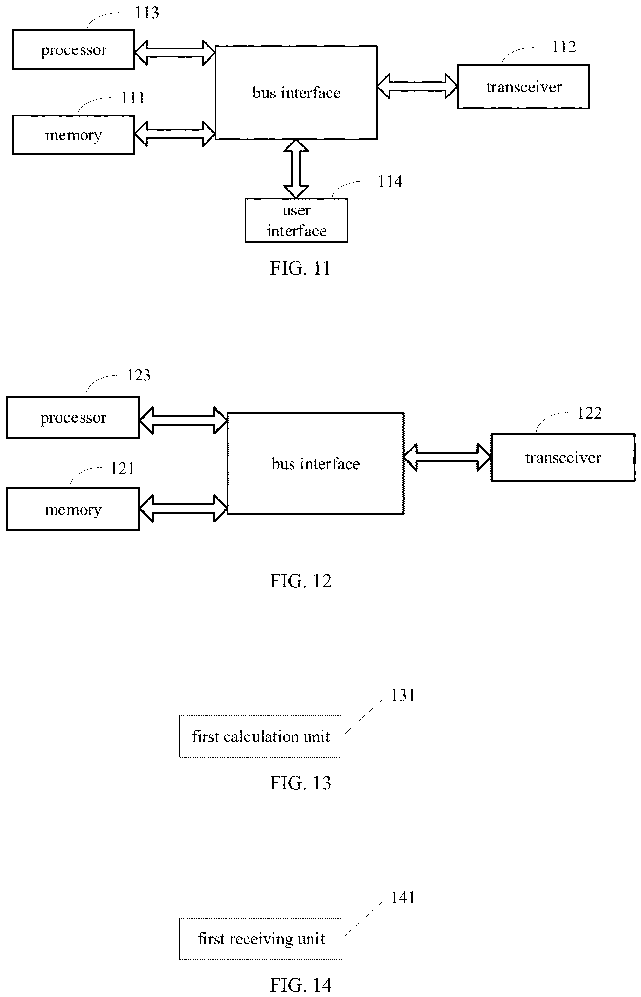

One embodiment of the present disclosure further provides an information processing device, which is a user equipment (UE), as shown in FIG. 11, including a memory 111, a transceiver 112 and a processor 113.

The memory 111 is used to store a computer program. The transceiver 112 is used to send and receive data under the control of the processor 113. The processor 113 is used to read the computer program in the memory 111 and perform the following operations:
calculating a sidelink positioning reference signal (SL-PRS) channel busy rate according to first information; where the first information at least includes measurement information of an SL-PRS.

In the information processing device provided in the embodiment of the present disclosure, by calculating the SL-PRS channel busy rate according to the first information, where the first information at least includes measurement information of an SL-PRS, it is capable of effectively obtaining the SL-PRS channel busy rate, and then supporting determination of appropriate SL-PRS transmission parameters based on this, thereby reducing the probability of SL-PRS transmission failure due to inappropriate SL-PRS transmission parameters and improving the SL-PRS transmission success rate. This effectively solves the problem in the related art where the SL-PRS channel busy rate cannot be accurately determined.

Specifically, the transceiver 112 is used to receive and send data under the control of the processor 113.

In FIG. 11, a bus architecture may include any number of interconnected bus and bridge. Specifically, various circuits of one or more processors, which are represented by the processor 113, and one or more memories, which are represented by the memory 111, are linked together. The bus architecture may link various other circuits, such as a peripheral device, voltage regulator and a power management circuit together. These features are well known in this field; therefore, this disclosure does not make further description on these features. The bus interface provides an interface. The transceiver 112 may be multiple elements, including a transmitter and a receiver and provide units, which communicate with other devices on the transmission medium. The transmission medium includes radio channels, wired channels, optical cables, etc. For different UEs, a user interface 114 may be an interface that can be connected to external or internal devices. The connected devices include but are not limited to a small keyboard, a display, a speaker, a microphone, a joystick, etc.

The processor 113 is responsible for managing the bus architecture and the normal processing. The memory 111 may be used to store data used by the processor 113 for performing operations.

The processor 113 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

The measurement information of the SL-PRS includes at least one of the following: measurement information of full-sensing; measurement information of partial-sensing or periodic-sensing; measurement information of configured full-sensing measurement window; measurement information of re-evaluation or short-term-sensing.

In one embodiment of the present disclosure, the first information includes at least one of the following sub-information: SL-PRS received signal strength indication (RSSI); SL-PRS reference signal receiving power (RSRP); physical sidelink control channel (PSCCH) RSSI; physical sidelink control channel reference signal receiving power (PSCCH RSRP); sidelink received signal strength indication SL-RSSI; sidelink reference signal receiving power (SL-RSRP); physical sidelink shared channel received signal strength indication (PSSCH RSSI); physical sidelink shared channel reference signal receiving power (PSSCH RSRP); SL-PRS pattern occupancy ratio.

The first information includes at least two items of the sub-information; the calculating a sidelink positioning reference signal (SL-PRS) channel busy rate according to first information, includes: calculating the SL-PRS channel busy rate according to the sub-information with the largest value among the at least two items of the sub-information.

In one embodiment of the present disclosure, the first information may be measured based on an SL-PRS dedicated resource pool.

The first information can be measured based on an SL-PRS shared resource pool; the operation further includes: measuring second information related to a sidelink (SL) channel busy rate in the SL-PRS shared resource pool. The calculating a sidelink positioning reference signal (SL-PRS) channel busy rate according to first information, includes: calculating an SL-PRS candidate channel busy rate based on the first information; calculating an SL channel busy rate based on the second information; obtaining a maximum value of the SL-PRS candidate channel busy rate and the SL channel busy rate as the SL-PRS channel busy rate.

In one embodiment of the present disclosure, the second information includes at least one of the following sub-information: SL-PRS RSSI; SL-PRS RSRP; PSCCH RSSI; PSCCH RSRP; SL-RSSI; SL-RSRP; PSSCH RSSI; PSSCH RSRP; SL-PRS pattern occupancy ratio.

The SL-PRS pattern occupancy ratio refers to a ratio between the number of first combs and the number of second combs in an SL-PRS comb pattern; where the number of first combs refers to the number of occupied combs; and the number of second combs refers to the number of all available combs.

In one embodiment of the present disclosure, the first information is measured within a first sensing measurement window by the UE performing a full sensing operation; or, the first information is measured within a second sensing measurement window by the UE performing a partial sensing operation or a periodic sensing operation; or, the first information is measured within a third sensing measurement window by the UE performing a re-evaluation operation or a short-term sensing operation; where the first sensing measurement window is a full sensing measurement window, the second sensing measurement window is a partial sensing measurement window or a periodic sensing measurement window, and the third sensing measurement window is a re-evaluation measurement window or a short-term sensing measurement window.

The SL-PRS channel busy rate in slot or time n refers to a part of a first subchannel in the resource pool; where the first subchannel refers to a subchannel in which the first information measured by the UE exceeds a configured or preconfigured threshold value.

In one embodiment of the present disclosure, the first information is obtained by periodical measurement in the first sensing measurement window, the second sensing measurement window or the third sensing measurement window; or, the first information is obtained via measurement triggered by SL-PRS transmission requirement information.

The calculating a sidelink positioning reference signal (SL-PRS) channel busy rate according to first information, includes: calculating the SL-PRS channel busy rate with a first formula; where the first formula is:

$$SL\_PRS\_CBR_n = \frac{N_{SC}}{N_{SC\_Total}} \times 100\%,$$

$SL\_PRS\_CBR_n$ represents an SL-PRS channel busy rate in slot or time n; $N_{SC}$ represents the number of subchannels in which first information measured by the UE exceeds the configured or pre-configured threshold value; $N_{SC\_Total}$ represents the total number of subchannels in the resource pool.

In one embodiment of the present disclosure, the first information is measured in a first slot by the UE performing a partial sensing operation; where the first slot refers to a slot in which the UE performs reception of a physical sidelink control channel (PSCCH) and/or SL-PRS within a channel busy rate (CBR) measurement window.

The calculating a sidelink positioning reference signal (SL-PRS) channel busy rate according to first information, includes: calculating the SL-PRS channel busy rate according to the first information in a slot in which the first information is measured.

Further, the operation further includes: when the number of the first slots is less than a configured or pre-configured first threshold, using a configured or pre-configured first preset value as the SL-PRS channel busy rate.

The SL-PRS channel busy rate in the slot or time n refers to a part of the second subchannel in the resource pool; where the second subchannel refers to a subchannel in which the first information measured by the UE exceeds the configured or pre-configured threshold value, and the first information is sensed and measured by the UE in K SL-PRS sensing occasions or periodic sensing occasions before the slot or time n; K is a natural number greater than or equal to 1.

In one embodiment of the present disclosure, the K SL-PRS sensing occasions or periodic sensing occasions are occasions corresponding to all bits configured as 1 in corresponding high layer parameters.

For each subchannel, the corresponding value of the first information is: an average value or maximum value of all measurement values of the first information in the K SL-PRS sensing occasions or periodic sensing occasions.

In one embodiment of the present disclosure, the SL-PRS channel busy rate in slot or time n refers to a part of a third subchannel in the resource pool; where the third subchannel refers to a subchannel in which the first information measured by the UE exceeds the configured or preconfigured threshold value, and the first information is sensed and measured by the UE in all sensing occasions or periodic sensing occasions within a fourth sensing measurement window.

A start time of a target time window is slot or time n-T, and an end time is slot or time n-1; the target time window is the first sensing measurement window, the second sensing measurement window, the third sensing measurement window, or the fourth sensing measurement window. The value of T is configured by signaling notification, or the value of T is pre-configured; when the value of T is pre-configured, T is M×100ms or L×100 slots, where M and L are both positive integers greater than or equal to 1.

In one embodiment of the present disclosure, for each subchannel, the corresponding value of the first information is an average value or maximum value of all measurement values of the first information in all sensing occasions or periodic sensing occasions within the fourth sensing measurement window.

Further, the operation further includes: transmitting the SL-PRS channel busy rate and first indication information to a first device through the transceiver; where the first device is a UE or a network device; the first indication information is used to indicate whether the SL-PRS channel busy rate is calculated for the SL-PRS dedicated resource pool or for the SL-PRS shared resource pool.

In the embodiment of the present disclosure, the operation further includes: determining an SL-PRS transmission parameter according to the SL-PRS channel busy rate; where the SL-PRS transmission parameter includes: SL-PRS maximum transmission power, and/or, SL-PRS subchannel number range.

It is to be noted here that the above device provided in the embodiment of the present disclosure can implement all the method steps implemented by the above method embodiment, and can achieve the same technical effect. The parts and beneficial effects of this embodiment that are the same as the method embodiment will not be described in detail here.

One embodiment of the present disclosure further provides an information processing device, which is a first device, as shown in FIG. 12, including a memory 121, a transceiver 122, and a processor 123.

The memory 121 is used to store a computer program. The transceiver 122 is used to send and receive data under the control of the processor 123. The processor 123 is used to read the computer program in the memory 121 and perform the following operations: receiving, through the transceiver 122, an SL-PRS channel busy rate and first indication information transmitted by a user equipment (UE); where the first device is a UE or a network device, and the first indication information is used to indicate whether the SL-PRS channel busy rate is calculated for an SL-PRS dedicated resource pool or for an SL-PRS shared resource pool.

In the information processing device provided in the embodiment of the present disclosure, by receiving the SL-PRS channel busy rate and the first indication information transmitted by the UE, where the first device is a UE or a network device, and the first indication information is used to indicate whether the SL-PRS channel busy rate is calculated for the SL-PRS dedicated resource pool or for the SL-PRS shared resource pool, the SL-PRS channel busy rate transmitted by the UE can be accurately obtained to support subsequent operations. This effectively solves the problem in the related art where the SL-PRS channel busy rate cannot be accurately determined.

Specifically, the transceiver 122 is used to receive and send data under the control of the processor 123.

In FIG. 12, a bus architecture may include any number of interconnected bus and bridge. Specifically, various circuits of one or more processors, which are represented by the processor 123, and one or more memories, which are represented by the memory 123, are linked together. The bus architecture may link various other circuits, such as a peripheral device, voltage regulator and a power management circuit together. These features are well known in this field; therefore, this disclosure does not make further description on these features. The bus interface provides an interface. The transceiver 122 may be multiple elements, including a transmitter and a receiver and provide units, which communicate with other devices on the transmission medium. The transmission medium includes radio channels, wired channels, optical cables, etc. The processor 123 is responsible for managing the bus architecture and the normal processing. The memory 121 may be used to store data used by the processor 123 for performing operations.

In some embodiments, the processor 123 may be a central processing unit (CPU), an application specific integrated circuit (ASIC), a field-programmable gate array (FPGA) or a complex programmable logic device (CPLD). The processor may also adopt multi-core architecture.

It is to be noted here that when the first device is implemented as a UE, its architecture may also include a user interface, in which case further details can be found in the associated description of FIG. 11 and are not reiterated here.

Further, the operation further includes: configuring, through the transceiver, a first sensing measurement window for the UE performing a full sensing operation, where the first sensing measurement window is a full sensing measurement window; or, configuring a second sensing measurement window for the UE performing a partial sensing operation or a periodic sensing operation, where the second sensing measurement window is a partial sensing measurement window or a periodic sensing measurement window; or, configuring a third sensing measurement window for the UE performing a re-evaluation operation or a short-term sensing operation, where the third sensing measurement window is a re-evaluation measurement window or a short-term sensing measurement window;

and/or, transmitting a configured threshold value to the UE for the UE to obtain the first subchannel or the second subchannel or the third subchannel; and/or, configuring the first sensing measurement window, the second sensing measurement window or the third sensing measurement window periodically to the UE, so that the UE can periodically measure the first information in the first sensing measurement window, the second sensing measurement window or the third sensing measurement window; and/or, configuring a first threshold to the UE, so that the UE can use the configured or pre-configured first preset value as the SL-PRS channel busy rate when the number of first slots is less than the first threshold, where the first slot refers to a slot in which the UE receives PSCCH and/or SL-PRS within the channel busy rate CBR measurement window; and/or, configuring high layer parameters of SL-PRS sensing occasion or periodic sensing occasion to the UE, so that the UE can use occasions corresponding to all bits configured as 1 in the high layer parameters as K SL-PRS sensing occasions or periodic sensing occasions, where K is a natural number greater than or equal to 1.

The start time of the target time window is slot or time n-T, and the end time is slot or time n-1; the target time window is the first sensing measurement window, the second sensing measurement window or the third sensing measurement window; where the value of T is configured to the UE by the first device through signaling notification, or the value of T is pre-configured. When the value of T is pre-configured, T is M×100ms or L×100 slots, where M and L are both positive integers greater than or equal to 1.

It is to be noted here that the above device provided in the embodiment of the present disclosure can implement all the method steps implemented by the above method embodiment on the first device side, and can achieve the same technical effect. The parts and beneficial effects of this embodiment that are the same as the method embodiment will not be described in detail here.

One embodiment of the present disclosure further provides an information processing apparatus, which is applied to a user equipment (UE), as shown in FIG. 13, including:

a first calculation unit 131 used to calculate a sidelink positioning reference signal (SL-PRS) channel busy rate according to first information; where the first information at least includes measurement information of an SL-PRS

In the information processing apparatus provided in the embodiment of the present disclosure, by calculating the SL-PRS channel busy rate according to the first information, where the first information at least includes measurement information of an SL-PRS, it is capable of effectively obtaining the SL-PRS channel busy rate, and then supporting determination of appropriate SL-PRS transmission parameters based on this, thereby reducing the probability of SL-PRS transmission failure due to inappropriate SL-PRS transmission parameters and improving the SL-PRS transmission success rate. This effectively solves the problem in the related art where the SL-PRS channel busy rate cannot be accurately determined.

The measurement information of the SL-PRS includes at least one of the following: measurement information of full-sensing; measurement information of partial-sensing or periodic-sensing; measurement information of configured full-sensing measurement window; measurement information of re-evaluation or short-term-sensing.

In one embodiment of the present disclosure, the first information includes at least one of the following sub-information: SL-PRS received signal strength indication (RSSI); SL-PRS reference signal receiving power (RSRP); physical sidelink control channel (PSCCH) RSSI; physical sidelink control channel reference signal receiving power (PSCCH RSRP); sidelink received signal strength indication SL-RSSI; sidelink reference signal receiving power (SL-RSRP); physical sidelink shared channel received signal strength indication (PSSCH RSSI); physical sidelink shared channel reference signal receiving power (PSSCH RSRP); SL-PRS pattern occupancy ratio.

The first information includes at least two items of the sub-information; the calculating a sidelink positioning reference signal (SL-PRS) channel busy rate according to first information, includes: calculating the SL-PRS channel busy rate according to the sub-information with the largest value among the at least two items of the sub-information.

In one embodiment of the present disclosure, the first information may be measured based on an SL-PRS dedicated resource pool.

The first information can be measured based on an SL-PRS shared resource pool; the device further includes: a first measurement unit used to measure second information related to a sidelink (SL) channel busy rate in the SL-PRS shared resource pool. The calculating a sidelink positioning reference signal (SL-PRS) channel busy rate according to first information, includes: calculating an SL-PRS candidate channel busy rate based on the first information; calculating an SL channel busy rate based on the second information; obtaining a maximum value of the SL-PRS candidate channel busy rate and the SL channel busy rate as the SL-PRS channel busy rate.

In one embodiment of the present disclosure, the second information includes at least one of the following sub-information: SL-PRS RSSI; SL-PRS RSRP; PSCCH RSSI; PSCCH RSRP; SL-RSSI; SL-RSRP; PSSCH RSSI; PSSCH RSRP; SL-PRS pattern occupancy ratio.

The SL-PRS pattern occupancy ratio refers to a ratio between the number of first combs and the number of second combs in an SL-PRS comb pattern; where the number of first combs refers to the number of occupied combs; and the number of second combs refers to the number of all available combs.

In one embodiment of the present disclosure, the first information is measured within a first sensing measurement window by the UE performing a full sensing operation; or, the first information is measured within a second sensing measurement window by the UE performing a partial sensing operation or a periodic sensing operation; or, the first information is measured within a third sensing measurement window by the UE performing a re-evaluation operation or a short-term sensing operation; where the first sensing measurement window is a full sensing measurement window, the second sensing measurement window is a partial sensing measurement window or a periodic sensing measurement window, and the third sensing measurement window is a re-evaluation measurement window or a short-term sensing measurement window.

The SL-PRS channel busy rate in slot or time n refers to a part of a first subchannel in the resource pool; where the first subchannel refers to a subchannel in which the first information measured by the UE exceeds a configured or preconfigured threshold value.

In one embodiment of the present disclosure, the first information is obtained by periodical measurement in the first sensing measurement window, the second sensing measurement window or the third sensing measurement window; or, the first information is obtained via measurement triggered by SL-PRS transmission requirement information.

The calculating a sidelink positioning reference signal (SL-PRS) channel busy rate according to first information, includes: calculating the SL-PRS channel busy rate with a first formula; where the first formula is:

$$SL\_PRS\_CBR_n = \frac{N_{SC}}{N_{SC\_Total}} \times 100\%$$ ,

SL_PRS_CBR$_n$ represents an SL-PRS channel busy rate in slot or time n; $N_{SC}$ represents the number of subchannels in which first information measured by the UE exceeds the configured or pre-configured threshold value; $N_{SC\_Total}$ represents the total number of subchannels in the resource pool.

In one embodiment of the present disclosure, the first information is measured in a first slot by the UE performing a partial sensing operation; where the first slot refers to a slot in which the UE performs reception of a physical sidelink control channel (PSCCH) and/or SL-PRS within a channel busy rate (CBR) measurement window.

The calculating a sidelink positioning reference signal (SL-PRS) channel busy rate according to first information, includes: calculating the SL-PRS channel busy rate according to the first information in a slot in which the first information is measured.

Further, the information processing apparatus further includes: a first processing unit used to, when the number of the first slots is less than a configured or pre-configured first threshold, use a configured or pre-configured first preset value as the SL-PRS channel busy rate.

The SL-PRS channel busy rate in the slot or time n refers to a part of the second subchannel in the resource pool; where the second subchannel refers to a subchannel in which the first information measured by the UE exceeds the configured or pre-configured threshold value, and the first information is sensed and measured by the UE in K SL-PRS sensing occasions or periodic sensing occasions before the slot or time n; K is a natural number greater than or equal to 1.

In one embodiment of the present disclosure, the K SL-PRS sensing occasions or periodic sensing occasions are occasions corresponding to all bits configured as 1 in corresponding high layer parameters.

For each subchannel, the corresponding value of the first information is: an average value or maximum value of all measurement values of the first information in the K SL-PRS sensing occasions or periodic sensing occasions.

In one embodiment of the present disclosure, the SL-PRS channel busy rate in slot or time n refers to a part of a third subchannel in the resource pool; where the third subchannel refers to a subchannel in which the first information measured by the UE exceeds the configured or preconfigured threshold value, and the first information is sensed and measured by the UE in all sensing occasions or periodic sensing occasions within a fourth sensing measurement window.

A start time of a target time window is slot or time n-T, and an end time is slot or time n-1; the target time window is the first sensing measurement window, the second sensing measurement window, the third sensing measurement window, or the fourth sensing measurement window. The value of T is configured by signaling notification, or the value of T is pre-configured; when the value of T is pre-configured, T is M×100ms or L×100 slots, where M and L are both positive integers greater than or equal to 1.

In one embodiment of the present disclosure, for each subchannel, the corresponding value of the first information is an average value or maximum value of all measurement values of the first information in all sensing occasions or periodic sensing occasions within the fourth sensing measurement window.

Further, the information processing apparatus further includes: a first transmission unit used to transmit the SL-PRS channel busy rate and first indication information to a first device; where the first device is a UE or a network device; the first indication information is used to indicate whether the SL-PRS channel busy rate is calculated for the SL-PRS dedicated resource pool or for the SL-PRS shared resource pool.

In the embodiment of the present disclosure, the information processing apparatus further includes: a first determining unit used to determine an SL-PRS transmission parameter according to the SL-PRS channel busy rate; where the SL-PRS transmission parameter includes: SL-PRS maximum transmission power, and/or, SL-PRS subchannel number range.

It is to be noted here that the above apparatus provided in the embodiment of the present disclosure can implement all the method steps implemented by the above method embodiment on the UE side, and can achieve the same technical effect. The parts and beneficial effects of this embodiment that are the same as the method embodiment will not be described in detail here.

One embodiment of the present disclosure further provides an information processing apparatus, which is applied to a first device, as shown in FIG. 14, and includes:

> a first receiving unit 141 used to receive an SL-PRS channel busy rate and first indication information transmitted by a user equipment (UE);
> where the first device is a UE or a network device, and the first indication information is used to indicate whether the SL-PRS channel busy rate is calculated for an SL-PRS dedicated resource pool or for an SL-PRS shared resource pool.

In the information processing apparatus provided in the embodiment of the present disclosure, by receiving the SL-PRS channel busy rate and the first indication information transmitted by the UE, where the first device is a UE or a network device, and the first indication information is used to indicate whether the SL-PRS channel busy rate is calculated for the SL-PRS dedicated resource pool or for the SL-PRS shared resource pool, the SL-PRS channel busy rate transmitted by the UE can be accurately obtained to support subsequent operations. This effectively solves the problem in the related art where the SL-PRS channel busy rate cannot be accurately determined.

Further, the information processing apparatus further includes: a first configuring unit used to configure a first sensing measurement window for the UE performing a full sensing operation, where the first sensing measurement window is a full sensing measurement window; or, configure a second sensing measurement window for the UE performing a partial sensing operation or a periodic sensing operation, where the second sensing measurement window is a partial sensing measurement window or a periodic sensing measurement window; or, configure a third sensing measurement window for the UE performing a re-evaluation operation or a short-term sensing operation, where the third sensing measurement window is a re-evaluation measurement window or a short-term sensing measurement window; and/or, transmit a configured threshold value to the UE for the UE to obtain the first subchannel or the second subchannel or the third subchannel; and/or, configure the first sensing measurement window, the second sensing measurement window or the third sensing measurement window periodically to the UE, so that the UE can periodically measure the first information in the first sensing measurement window, the second sensing measurement window or the third sensing measurement window; and/or, configure a first threshold to the UE, so that the UE can use the configured or pre-configured first preset value as the SL-PRS channel busy rate when the number of first slots is less than the first threshold, where the first slot refers to a slot in which the UE receives PSCCH and/or SL-PRS within the channel busy rate CBR measurement window; and/or, configure high layer parameters of SL-PRS sensing occasion or periodic sensing occasion to the UE, so that the UE can use occasions corresponding to all bits configured as 1 in the high layer parameters as K SL-PRS sensing occasions or periodic sensing occasions, where K is a natural number greater than or equal to 1.

The start time of the target time window is slot or time n-T, and the end time is slot or time n-1; the target time window is the first sensing measurement window, the second sensing measurement window or the third sensing measurement window; where the value of T is configured to the UE by the first device through signaling notification, or the value of T is pre-configured. When the value of T is pre-configured, T is M×100ms or L×100 slots, where M and L are both positive integers greater than or equal to 1.

It is to be noted here that the above apparatus provided in the embodiment of the present disclosure can implement all the method steps implemented by the above method embodiment on the first device side, and can achieve the same technical effect. The parts and beneficial effects of this embodiment that are the same as the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a non-transitory readable storage medium, which stores a computer program, and the computer program is used to cause a processor to execute the method on the user equipment or on the first device.

The non-transitory readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), non-volatile memory (NAND FLASH), solid-state disk (Solid State Disk or Solid State Drive, SSD)), etc.

The implementation embodiments of the methods on the UE side or the first device side are all applicable to the embodiment of the non-transitory readable storage medium, and can also achieve the same technical effects.

A person skilled in the art should understand that the embodiments of the present application may be provided as methods, systems, or computer program products. Therefore, the present application may adopt the form of complete hardware embodiments, complete software embodiments, or embodiments combining software and hardware aspects. Moreover, this application may adopt the form of a computer program product implemented on one or more computer available storage media (including but not limited to a disk storage, an optical storage, etc.) containing computer available program code.

The present is described with reference to flowcharts and/or block diagrams of methods, devices (systems), and computer program products according to the embodiments of the present application. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It is to be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

**Claims**

1. An information processing method, applied to a user equipment (UE), comprising:

calculating a sidelink positioning reference signal (SL-PRS) channel busy rate according to first information;
wherein the first information includes measurement information of an SL-PRS.

2. The method according to claim 1, wherein the measurement information of the SL-PRS includes at least one of the following:

measurement information of full-sensing;
measurement information of partial-sensing or periodic-sensing;
measurement information of configured full-sensing measurement window; and
measurement information of re-evaluation or short-term-sensing.

3. The method according to claim 1, wherein the first information includes at least one of the following sub-information:

SL-PRS received signal strength indication (RSSI);
SL-PRS reference signal receiving power (RSRP);
physical sidelink control channel (PSCCH) RSSI;
physical sidelink control channel reference signal receiving power (PSCCH RSRP);
sidelink received signal strength indication SL-RSSI;
sidelink reference signal receiving power (SL-RSRP);
physical sidelink shared channel received signal strength indication (PSSCH RSSI);
physical sidelink shared channel reference signal receiving power (PSSCH RSRP); and
SL-PRS pattern occupancy ratio.

4. The method according to claim 3, wherein the first information includes at least two items of the sub-information;
the calculating a sidelink positioning reference signal (SL-PRS) channel busy rate according to first information, includes: calculating the SL-PRS channel busy rate according to the sub-information with the largest value among the at least two items of the sub-information.

5. The method according to claim 3, wherein the first information is measured based on an SL-PRS dedicated resource pool.

6. The method according to claim 3, wherein the first information is measured based on an SL-PRS shared resource pool;
the method further includes:

measuring second information related to a sidelink channel busy rate in the SL-PRS shared resource pool;

wherein the calculating a sidelink positioning reference signal (SL-PRS) channel busy rate according to first information, includes:

calculating an SL-PRS candidate channel busy rate based on the first information;
calculating an SL channel busy rate based on the second information;
obtaining a maximum value of the SL-PRS candidate channel busy rate and the SL channel busy rate as the SL-PRS channel busy rate.

7. The method according to claim 6, wherein the second information includes at least one of the following sub-information:

SL-PRS RSSI;
SL-PRS RSRP;
PSCCH RSSI;
PSCCH RSRP;
SL-RSSI;
SL-RSRP;
PSSCH RSSI;
PSSCH RSRP;
SL-PRS pattern occupancy ratio.

8. The method according to claim 3 or 7, wherein the SL-PRS pattern occupancy ratio refers to a ratio between the number of first combs and the number of second combs in an SL-PRS comb pattern;

wherein the number of first combs refers to the number of occupied combs; and
the number of second combs refers to the number of all available combs.

9. The method according to claim 3, wherein the first information is measured within a first sensing measurement window by the UE performing a full sensing operation;

or, the first information is measured within a second sensing measurement window by the UE performing a partial sensing operation or a periodic sensing operation;
or, the first information is measured within a third sensing measurement window by the UE performing a re-evaluation operation or a short-term sensing operation;
wherein the first sensing measurement window is a full sensing measurement window, the second sensing measurement window is a partial sensing measurement window or a periodic sensing measurement window, and the third sensing measurement window is a re-evaluation measurement window or a short-term sensing measurement window.

10. The method according to claim 1, wherein the SL-PRS channel busy rate in slot or time n refers to a part of a first subchannel in the resource pool;
the first subchannel refers to a subchannel in which the first information measured by the UE exceeds a configured or preconfigured threshold value.

11. The method according to claim 9, wherein the first information is obtained by periodical measurement in the first sensing measurement window, the second sensing measurement window or the third sensing measurement window;
or, the first information is obtained via measurement triggered by SL-PRS transmission requirement information.

12. The method according to claim 3, wherein the calculating a sidelink positioning reference signal (SL-PRS) channel busy rate according to first information, includes:

calculating the SL-PRS channel busy rate with a first formula; wherein the first formula is:

$$SL\_PRS\_CBR_n = \frac{N_{SC}}{N_{SC\_Total}} \times 100\%,$$

$SL\_PRS\_CBR_n$ represents an SL-PRS channel busy rate in slot or time n;
$N_{SC}$ represents the number of subchannels in which first information measured by the UE exceeds the configured or pre-configured threshold value;
$N_{SC\_Total}$ represents the total number of subchannels in the resource pool.

13. The method according to claim 3, wherein the first information is measured in a first slot by the UE performing a partial sensing operation;
the first slot refers to a slot in which the UE performs reception of a physical sidelink control channel (PSCCH) and/or SL-PRS within a channel busy rate (CBR) measurement window.

14. The method according to claim 13, wherein the calculating a sidelink positioning reference signal (SL-PRS) channel busy rate according to first information, includes:
calculating the SL-PRS channel busy rate according to the first information in a slot in which the first information is measured.

15. The method according to claim 13, wherein the method further includes:

using a configured or pre-configured first preset value as the SL-PRS channel busy rate, when the number of the first slots is less than a configured or pre-configured first threshold.

16. The method according to claim 3 or 13, wherein the SL-PRS channel busy rate in slot or time n refers to a part of the second subchannel in the resource pool; the second subchannel refers to a subchannel in which the first information measured by the UE exceeds the configured or pre-configured threshold value, and the first information is sensed and measured by the UE in K SL-PRS sensing occasions or periodic sensing occasions before the slot or time n; K is a natural number greater than or equal to 1.

17. The method according to claim 16, wherein the K SL-PRS sensing occasions or periodic sensing occasions are occasions corresponding to all bits configured as 1 in corresponding high layer parameters.

18. The method according to claim 16, wherein for each subchannel, a corresponding value of the first information is an average value or maximum value of all measurement values of the first information in the K SL-PRS sensing occasions or periodic sensing occasions.

19. The method according to claim 13, wherein the SL-PRS channel busy rate in slot or time n refers to a part of a third subchannel in the resource pool; the third subchannel refers to a subchannel in which the first information measured by the UE exceeds the configured or preconfigured threshold value, and the first information is sensed and measured by the UE in all sensing occasions or periodic sensing occasions within a fourth sensing measurement window.

20. The method according to claim 9 or 19, wherein a start time of a target time window is slot or time n-T, and an end time is slot or time n-1; the target time window is the first sensing measurement window, the second sensing measurement window, the third sensing measurement window, or the fourth sensing measurement window; a value of T is configured by signaling notification, or the value of T is pre-configured; when the value of T is pre-configured, T is M×100ms or L×100 slots, where M and L are both positive integers greater than or equal to 1.

21. The method according to claim 19, wherein for each subchannel, a corresponding value of the first information is an average value or maximum value of all measurement values of the first information in all sensing occasions or periodic sensing occasions within the fourth sensing measurement window.

22. The method according to claim 1, wherein the method further includes:

transmitting the SL-PRS channel busy rate and first indication information to a first device; wherein the first device is a UE or a network device; the first indication information is used to indicate whether the SL-PRS channel busy rate is calculated for the SL-PRS dedicated resource pool or for the SL-PRS shared resource pool.

23. The method according to claim 1, wherein the method further includes:

determining an SL-PRS transmission parameter according to the SL-PRS channel busy rate; wherein the SL-PRS transmission parameter includes: SL-PRS maximum transmission power, and/or, SL-PRS subchannel number range.

24. An information processing method, applied to a first device, comprising:

receiving an SL-PRS channel busy rate and first indication information transmitted by a user equipment (UE); wherein the first device is a UE or a network device, the first indication information is used to indicate whether the SL-PRS channel busy rate is calculated for an SL-PRS dedicated resource pool or for an SL-PRS shared resource pool.

25. The method according to claim 24, wherein the method further includes:

configuring a first sensing measurement window for the UE performing a full sensing operation, wherein the first sensing measurement window is a full sensing measurement window; or, configuring a second sensing measurement window for the UE performing a partial sensing operation or a periodic sensing operation, wherein the second sensing measurement window is a partial sensing measurement window or a periodic sensing measurement window; or, configuring a third sensing measurement window for the UE performing a re-evaluation operation or a short-term sensing operation, wherein the third sensing measurement window is a re-evaluation measurement window or a short-term sensing measurement window; and/or, transmitting a configured threshold value to the UE for the UE to obtain the first subchannel or the second subchannel or the third subchannel;

and/or, configuring the first sensing measurement window, the second sensing measurement window or the third sensing measurement window periodically to the UE, thereby enabling the UE to periodically measure the first information in the first sensing measurement window, the second sensing measurement window or the third sensing measurement window;

and/or, configuring a first threshold to the UE, thereby enabling the UE to use the configured or pre-configured first preset value as the SL-PRS channel busy rate when the number of first slots is less than the first threshold, wherein the first slot refers to a slot in which the UE receives PSCCH and/or SL-PRS within the channel busy rate CBR measurement window;

and/or, configuring high layer parameters of SL-PRS sensing occasion or periodic sensing occasion to the UE, thereby enabling the UE to use occasions corresponding to all bits configured as 1 in the high layer parameters as K SL-PRS sensing occasions or periodic sensing occasions, wherein K is a natural number greater than or equal to 1.

26. The method according to claim 25, wherein a start time of the target time window is slot or time n-T, and an end time is slot or time n-1; the target time window is the first sensing measurement window, the second sensing measurement window or the third sensing measurement window;

a value of T is configured to the UE by the first device through signaling notification, or the value of T is pre-configured; when the value of T is pre-configured, T is M×100ms or L×100 slots, where M and L are both positive integers greater than or equal to 1.

27. An information processing device, which is a user equipment (UE), comprising: a memory, a transceiver, and a processor;

wherein the memory is used to store a computer program; the transceiver is used to send and receive data under the control of the processor; the processor is used to read the computer program in the memory and perform the following operations:

calculating a sidelink positioning reference signal (SL-PRS) channel busy rate according to first information;

wherein the first information at least includes measurement information of an SL-PRS.

28. The device according to claim 27, wherein the measurement information of the SL-PRS includes at least one of the following:

measurement information of full-sensing;

measurement information of partial-sensing or periodic-sensing;

measurement information of configured full-sensing measurement window; and

measurement information of re-evaluation or short-term-sensing.

29. The device according to claim 27, wherein the first information includes at least one of the following sub-information:

SL-PRS received signal strength indication (RSSI);

SL-PRS reference signal receiving power (RSRP);

physical sidelink control channel (PSCCH) RSSI;

physical sidelink control channel reference signal receiving power (PSCCH RSRP);

sidelink received signal strength indication SL-RSSI;

sidelink reference signal receiving power (SL-RSRP);

physical sidelink shared channel received signal strength indication (PSSCH RSSI);

physical sidelink shared channel reference signal receiving power (PSSCH RSRP); and

SL-PRS pattern occupancy ratio.

30. The device according to claim 29, wherein the first information includes at least two items of the sub-information;

the calculating a sidelink positioning reference signal (SL-PRS) channel busy rate according to first information, includes:

calculating the SL-PRS channel busy rate according to the sub-information with the largest value among the at least two items of the sub-information.

31. The device according to claim 29, wherein the first information is measured based on an SL-PRS dedicated resource pool.

32. The device according to claim 29, wherein the first information is measured based on an SL-PRS shared resource pool;

the operations further include:

measuring second information related to a sidelink channel busy rate in the SL-PRS shared resource pool;

wherein the calculating a sidelink positioning reference signal (SL-PRS) channel busy rate according to first information, includes:

calculating an SL-PRS candidate channel busy rate based on the first information;

calculating an SL channel busy rate based on the second information;

obtaining a maximum value of the SL-PRS candidate channel busy rate and the SL channel busy rate as the SL-PRS channel busy rate.

33. The device according to claim 32, wherein the second information includes at least one of the following sub-information:

SL-PRS RSSI;
SL-PRS RSRP;
PSCCH RSSI;
PSCCH RSRP;
SL-RSSI;
SL-RSRP;
PSSCH RSSI;
PSSCH RSRP;
SL-PRS pattern occupancy ratio.

34. The device according to claim 29 or 33, wherein the SL-PRS pattern occupancy ratio refers to a ratio between the number of first combs and the number of second combs in an SL-PRS comb pattern;

wherein the number of first combs refers to the number of occupied combs; and
the number of second combs refers to the number of all available combs.

35. The device according to claim 29, wherein the first information is measured within a first sensing measurement window by the UE performing a full sensing operation;

or, the first information is measured within a second sensing measurement window by the UE performing a partial sensing operation or a periodic sensing operation;
or, the first information is measured within a third sensing measurement window by the UE performing a re-evaluation operation or a short-term sensing operation;
wherein the first sensing measurement window is a full sensing measurement window, the second sensing measurement window is a partial sensing measurement window or a periodic sensing measurement window, and the third sensing measurement window is a re-evaluation measurement window or a short-term sensing measurement window.

36. The device according to claim 27, wherein the SL-PRS channel busy rate in slot or time n refers to a part of a first subchannel in the resource pool;
the first subchannel refers to a subchannel in which the first information measured by the UE exceeds a configured or preconfigured threshold value.

37. The device according to claim 35, wherein the first information is obtained by periodical measurement in the first sensing measurement window, the second sensing measurement window or the third sensing measurement window;
or, the first information is obtained via measurement triggered by SL-PRS transmission requirement information.

38. The device according to claim 29, wherein the calculating a sidelink positioning reference signal (SL-PRS) channel busy rate according to first information, includes:

calculating the SL-PRS channel busy rate with a first formula; wherein the first formula is:

$$SL\_PRS\_CBR_n = \frac{N_{SC}}{N_{SC\_Total}} \times 100\%,$$

$SL\_PRS\_CBR_n$ represents an SL-PRS channel busy rate in slot or time n;
$N_{SC}$ represents the number of subchannels in which first information measured by the UE exceeds the configured or pre-configured threshold value;
$N_{SC\_Total}$ represents the total number of subchannels in the resource pool.

39. The device according to claim 29, wherein the first information is measured in a first slot by the UE performing a partial sensing operation;
the first slot refers to a slot in which the UE performs reception of a physical sidelink control channel (PSCCH) and/or SL-PRS within a channel busy rate (CBR) measurement window.

40. The device according to claim 27, wherein the calculating a sidelink positioning reference signal (SL-PRS) channel busy rate according to first information, includes:
calculating the SL-PRS channel busy rate according to the first information in a slot in which the first information is measured.

41. The device according to claim 39, wherein the operations further include:
using a configured or pre-configured first preset value as the SL-PRS channel busy rate, when the number of the first slots is less than a configured or pre-configured first threshold.

42. The device according to claim 29 or 39, wherein the SL-PRS channel busy rate in slot or time n refers to a part of the second subchannel in the resource pool;
the second subchannel refers to a subchannel in which the first information measured by the UE exceeds the configured or pre-configured threshold value, and the first information is sensed and measured by the UE in K SL-PRS sensing occasions or periodic sensing occasions before the slot or time n; K is a natural number greater than or equal to 1.

43. The device according to claim 42, wherein the K SL-PRS sensing occasions or periodic sensing occasions are occasions corresponding to all bits configured as 1 in corresponding high layer parameters.

44. The device according to claim 42, wherein for each subchannel, a corresponding value of the first information is: an average value or maximum value of all measurement values of the first information in the K SL-PRS sensing occasions or periodic sensing occasions.

45. The device according to claim 39, wherein the SL-PRS channel busy rate in slot or time n refers to a part of a third subchannel in the resource pool; the third subchannel refers to a subchannel in which the first information measured by the UE exceeds the configured or preconfigured threshold value, and the first information is sensed and measured by the UE in all sensing occasions or periodic sensing occasions within a fourth sensing measurement window.

46. The device according to claim 35 or 45, wherein a start time of a target time window is slot or time n-T, and an end time is slot or time n-1; the target time window is the first sensing measurement window, the second sensing measurement window, the third sensing measurement window, or the fourth sensing measurement window; a value of T is configured by signaling notification, or the value of T is pre-configured; when the value of T is pre-configured, T is M×100ms or L×100 slots, where M and L are both positive integers greater than or equal to 1.

47. The device according to claim 45, wherein for each subchannel, a corresponding value of the first information is an average value or maximum value of all measurement values of the first information in all sensing occasions or periodic sensing occasions within the fourth sensing measurement window.

48. The device according to claim 27, wherein the operations further include:

transmitting, through the transceiver, the SL-PRS channel busy rate and first indication information to a first device; wherein the first device is a UE or a network device; the first indication information is used to indicate whether the SL-PRS channel busy rate is calculated for the SL-PRS dedicated resource pool or for the SL-PRS shared resource pool.

49. The device according to claim 27, wherein the operations further include:

determining an SL-PRS transmission parameter according to the SL-PRS channel busy rate; wherein the SL-PRS transmission parameter includes: SL-PRS maximum transmission power, and/or, SL-PRS subchannel number range.

50. An information processing device, which is a first device, comprising: a memory, a transceiver, and a processor; wherein the memory is used to store a computer program; the transceiver is used to send and receive data under the control of the processor; the processor is used to read the computer program in the memory and perform the following operations:

receiving, through the transceiver, an SL-PRS channel busy rate and first indication information transmitted by a user equipment (UE); wherein the first device is a UE or a network device, the first indication information is used to indicate whether the SL-PRS channel busy rate is calculated for an SL-PRS dedicated resource pool or for an SL-PRS shared resource pool.

51. The device according to claim 50, wherein the operations further include:

configuring a first sensing measurement window for the UE performing a full sensing operation, wherein the first sensing measurement window is a full sensing measurement window; or, configuring a second sensing measurement window for the UE performing a partial sensing operation or a periodic sensing operation, wherein the second sensing measurement window is a partial sensing measurement window or a periodic sensing measurement window; or, configuring a third sensing measurement window for the UE performing a re-evaluation operation or a short-term sensing operation, wherein the third sensing measurement window is a re-evaluation measurement window or a short-term sensing measurement window; and/or, transmitting a configured threshold value to the UE for the UE to obtain the first subchannel or the second subchannel or the third subchannel; and/or, configuring the first sensing measurement window, the second sensing measurement window or the third sensing measurement window periodically to the UE, thereby enabling the UE to periodically measure the first information in the first sensing measurement window, the second sensing measurement window or the third sensing measurement window;

and/or, configuring a first threshold to the UE, thereby enabling the UE to use the configured or pre-configured first preset value as the SL-PRS channel busy rate when the number of first slots is less than the first threshold, wherein the first slot refers to a slot in which the UE receives PSCCH and/or SL-PRS within the channel busy rate CBR measurement window;

and/or, configuring high layer parameters of SL-PRS sensing occasion or periodic sensing occasion to the UE, thereby enabling the UE to use occasions corresponding to all bits configured as 1 in the high layer parameters as K SL-PRS sensing occasions or periodic sensing occasions, wherein K is a natural number greater than or equal to 1.

52. The device according to claim 51, wherein a start time of the target time window is slot or time n-T, and an end time is slot or time n-1; the target time window is the first sensing measurement window, the second sensing measurement window or the third sensing measurement window;

a value of T is configured to the UE by the first device through signaling notification, or the value of T is pre-configured; when the value of T is pre-configured, T is M×100ms or L×100 slots, where M and L are both positive integers greater than or equal to 1.

53. An information processing apparatus, applied to a user equipment (UE), comprising:

a first calculation unit used to calculate a sidelink positioning reference signal (SL-PRS) channel busy rate according to first information; wherein the first information at least includes measurement information of an SL-PRS.

54. The apparatus according to claim 53, wherein the measurement information of the SL-PRS includes at least one of the following:

measurement information of full-sensing; measurement information of partial-sensing or periodic-sensing; measurement information of configured full-sensing measurement window; and measurement information of re-evaluation or short-term-sensing.

55. The apparatus according to claim 53, wherein the first information includes at least one of the following sub-information:

SL-PRS received signal strength indication (RSSI); SL-PRS reference signal receiving power (RSRP); physical sidelink control channel (PSCCH) RSSI; physical sidelink control channel reference signal receiving power (PSCCH RSRP); sidelink received signal strength indication SL-RSSI; sidelink reference signal receiving power (SL-RSRP); physical sidelink shared channel received signal strength indication (PSSCH RSSI); physical sidelink shared channel reference signal receiving power (PSSCH RSRP); and SL-PRS pattern occupancy ratio.

56. The apparatus according to claim 55, wherein the first information includes at least two items of the sub-information;

the calculating a sidelink positioning reference signal (SL-PRS) channel busy rate according to first information, includes: calculating the SL-PRS channel busy rate according to the sub-information with the largest value among the at least two items of the sub-information.

57. The apparatus according to claim 55, wherein the first information is measured based on an SL-PRS dedicated resource pool.

58. The apparatus according to claim 55, wherein the first information is measured based on an SL-PRS shared resource pool;

the apparatus further includes:

a first measurement unit used to measure second information related to a sidelink channel busy rate in the SL-PRS shared resource pool; wherein the calculating a sidelink positioning reference signal (SL-PRS) channel busy rate according to first information, includes:

calculating an SL-PRS candidate channel busy rate based on the first information; calculating an SL channel busy rate based on the second information; obtaining a maximum value of the SL-PRS candidate channel busy rate and the SL channel busy rate as the SL-PRS channel busy rate.

59. The apparatus according to claim 58, wherein the second information includes at least one of the following sub-information:

SL-PRS RSSI;

SL-PRS RSRP;
PSCCH RSSI;
PSCCH RSRP;
SL-RSSI;
SL-RSRP;
PSSCH RSSI;
PSSCH RSRP;
SL-PRS pattern occupancy ratio.

**60.** The apparatus according to claim 55 or 59, wherein the SL-PRS pattern occupancy ratio refers to a ratio between the number of first combs and the number of second combs in an SL-PRS comb pattern;

wherein the number of first combs refers to the number of occupied combs; and
the number of second combs refers to the number of all available combs.

**61.** The apparatus according to claim 55, wherein the first information is measured within a first sensing measurement window by the UE performing a full sensing operation;

or, the first information is measured within a second sensing measurement window by the UE performing a partial sensing operation or a periodic sensing operation;
or, the first information is measured within a third sensing measurement window by the UE performing a re-evaluation operation or a short-term sensing operation;
wherein the first sensing measurement window is a full sensing measurement window, the second sensing measurement window is a partial sensing measurement window or a periodic sensing measurement window, and the third sensing measurement window is a re-evaluation measurement window or a short-term sensing measurement window.

**62.** The apparatus according to claim 53, wherein the SL-PRS channel busy rate in slot or time n refers to a part of a first subchannel in the resource pool;
the first subchannel refers to a subchannel in which the first information measured by the UE exceeds a configured or preconfigured threshold value.

**63.** The apparatus according to claim 61, wherein the first information is obtained by periodical measurement in the first sensing measurement window, the second sensing measurement window or the third sensing measurement window;
or, the first information is obtained via measurement triggered by SL-PRS transmission requirement information.

**64.** The apparatus according to claim 55, wherein the calculating a sidelink positioning reference signal (SL-PRS) channel busy rate according to first information, includes:

calculating the SL-PRS channel busy rate with a first formula; wherein the first formula is:

$$\mathrm{SL\_PRS\_CBR_n} = \frac{\mathrm{N_{SC}}}{\mathrm{N_{SC\_Total}}} \times 100\%,$$

$\mathrm{SL\_PRS\_CBR_n}$ represents an SL-PRS channel busy rate in slot or time n;
$\mathrm{N_{SC}}$ represents the number of subchannels in which first information measured by the UE exceeds the configured or pre-configured threshold value;
$\mathrm{N_{SC\_Total}}$ represents the total number of subchannels in the resource pool.

**65.** The apparatus according to claim 55, wherein the first information is measured in a first slot by the UE performing a partial sensing operation;
the first slot refers to a slot in which the UE performs reception of a physical sidelink control channel (PSCCH) and/or SL-PRS within a channel busy rate (CBR) measurement window.

**66.** The apparatus according to claim 65, wherein the calculating a sidelink positioning reference signal (SL-PRS) channel busy rate according to first information, includes:
calculating the SL-PRS channel busy rate according to the first information in a slot in which the first information is measured.

**67.** The apparatus according to claim 65, wherein the apparatus further includes:
a first processing unit used to use a configured or pre-configured first preset value as the SL-PRS channel busy rate, when the number of the first slots is less than a configured or pre-configured first threshold.

**68.** The apparatus according to claim 55 or 65, wherein the SL-PRS channel busy rate in slot or time n refers to a part of the second subchannel in the resource pool;
the second subchannel refers to a subchannel in which the first information measured by the UE exceeds the configured or pre-configured threshold value, and the first information is sensed and measured by the UE in K SL-PRS sensing occasions or periodic sensing occasions before the slot or time n;
K is a natural number greater than or equal to 1.

**69.** The apparatus according to claim 68, wherein the K SL-PRS sensing occasions or periodic sensing occasions are occasions corresponding to all bits configured as 1 in corresponding high layer parameters.

**70.** The apparatus according to claim 68, wherein for each subchannel, a corresponding value of the first information is: an average value or maximum value of all measurement values of the first information in the K SL-PRS sensing occasions or periodic sensing occasions.

**71.** The apparatus according to claim 68, wherein the SL-PRS channel busy rate in slot or time n refers to a part of a third subchannel in the resource pool; the third subchannel refers to a subchannel in which the first information measured by the UE exceeds the configured or preconfigured threshold value, and the first information is sensed and measured by the UE in all sensing occasions or periodic sensing occasions within a fourth sensing measurement window.

**72.** The apparatus according to claim 69 or 71, wherein a start time of a target time window is slot or time n-T, and an end time is slot or time n-1; the target time window is the first sensing measurement window, the second sensing measurement window, the third sensing measurement window, or the fourth sensing measurement window; a value of T is configured by signaling notification, or the value of T is pre-configured; when the value of T is pre-configured, T is M×100ms or L×100 slots, where M and L are both positive integers greater than or equal to 1.

**73.** The apparatus according to claim 71, wherein for each subchannel, a corresponding value of the first information is an average value or maximum value of all measurement values of the first information in all sensing occasions or periodic sensing occasions within the fourth sensing measurement window.

**74.** The apparatus according to claim 53, wherein the apparatus further includes:

a first transmission unit used to transmit the SL-PRS channel busy rate and first indication information to a first device; wherein the first device is a UE or a network device; the first indication information is used to indicate whether the SL-PRS channel busy rate is calculated for the SL-PRS dedicated resource pool or for the SL-PRS shared resource pool.

**75.** The apparatus according to claim 53, wherein the apparatus further includes:

a first determining unit used to determine an SL-PRS transmission parameter according to the SL-PRS channel busy rate;

wherein the SL-PRS transmission parameter includes: SL-PRS maximum transmission power, and/or, SL-PRS subchannel number range.

**76.** An information processing apparatus, applied to a first device, comprising:

a first receiving unit used to receive an SL-PRS channel busy rate and first indication information transmitted by a user equipment (UE); wherein the first device is a UE or a network device, the first indication information is used to indicate whether the SL-PRS channel busy rate is calculated for an SL-PRS dedicated resource pool or for an SL-PRS shared resource pool.

**77.** The apparatus according to claim 76, wherein the apparatus further includes:

a first configuration unit used to configure a first sensing measurement window for the UE performing a full sensing operation, wherein the first sensing measurement window is a full sensing measurement window; or, configure a second sensing measurement window for the UE performing a partial sensing operation or a periodic sensing operation, wherein the second sensing measurement window is a partial sensing measurement window or a periodic sensing measurement window; or, configure a third sensing measurement window for the UE performing a re-evaluation operation or a short-term sensing operation, wherein the third sensing measurement window is a re-evaluation measurement window or a short-term sensing measurement window; and/or, transmit a configured threshold value to the UE for the UE to obtain the first subchannel or the second subchannel or the third subchannel; and/or, configure the first sensing measurement window, the second sensing measurement window or the third sensing measurement window periodically to the UE, thereby enabling the UE to periodically measure the first information in the first sensing measurement window, the second sensing measurement window or the third sensing measurement window; and/or, configure a first threshold to the UE, thereby enabling the UE to use the configured or pre-configured first preset value as the SL-PRS channel busy rate when the number of first slots is less than the first threshold, wherein the first slot refers to a slot in which the UE receives PSCCH and/or SL-PRS within the channel busy rate CBR measurement window;

and/or, configure high layer parameters of SL-PRS sensing occasion or periodic sensing occasion to the UE, thereby enabling the UE to use occasions corresponding to all bits configured as 1 in the high layer parameters as K SL-PRS sensing occasions or periodic sensing occasions, wherein K is a natural number greater than or equal to 1.

78. The apparatus according to claim 77, wherein a start time of the target time window is slot or time n-T, and an end time is slot or time n-1; the target time window is the first sensing measurement window, the second sensing measurement window or the third sensing measurement window;
a value of T is configured to the UE by the first device through signaling notification, or the value of T is pre-configured; when the value of T is pre-configured, T is M$\times$100ms or L$\times$100 slots, where M and L are both positive integers greater than or equal to 1.

79. A non-transitory readable storage medium, comprising a computer program stored thereon; wherein the computer program is used to cause a processor to execute the method according to any one of claims 1 to 26.

network device

UE ←→ UE

FIG. 1

UE2

SL-PRS1

measurement result

UE1

SL-PRS2

measurement result

UE3

SL-PRS3

measurement result

UE4

FIG. 2

calculating a sidelink positioning reference signal (SL-PRS) channel busy rate according to first information; where the first information at least includes measurement information of an SL-PRS

31

FIG. 3

receiving an SL-PRS channel busy rate and first indication
information transmitted by a user equipment (UE); where the first
device is a UE or a network device, and the first indication
information is used to indicate whether the SL-PRS channel busy rate
is calculated for an SL-PRS dedicated resource pool or for an SL-
PRS shared resource pool

41

FIG. 4

FIG. 5

FIG. 6

n-1000ms

partial sensing occasions    n+T1  resource   n+T2

k=[1 1 0 1 1 0 0 0 0 0]                            selection
                                                   window

UE ────────────────────────────────────────────────► time

        Pste                                    n
        p

        K=4 partial sensing
           occasions

        calculate SL-PRS CBR for slot
                   n

FIG. 7

n-T          n-1

CBR
measureme
nt window
T

n-1000ms

partial sensing occasion    n+T1  resource   n+T2

k=[1 1 0 1 1 0 0 0 0 0]                            selection
                                                   window

UE ────────────────────────────────────────────────► time

        Pste                                    n
        p

        X=2 partial sensing
           occasion

        calculate SL-PRS CBR for slot
                   n

FIG. 8

n-T     CBR         n-1
        measurement
        window T
        (continuous    n+T1              n+T2
n-1000ms    sensing        resource
        measurement        selection
        window)            window

UE ─────────────────────────────────────────► time
                        n

                    calculate SL-PRS CBR for slot
                    n

FIG. 9

                    n+T1        resource        n+T2
                                selection
                                window
                    n+Tx        n+Ty
n-1000ms                    CBR
                        measurement
                        window T

UE ─────────────────────────────────────────► time
            n
                        re-evaluation
                        or short-term
                        sensing

            calculate SL-PRS CBR for slot n

FIG. 10

113

processor

bus interface

112

transceiver

111

memory

114

user
interface

FIG. 11

123

processor

bus interface

122

transceiver

121

memory

FIG. 12

131

first calculation unit

FIG. 13

141

first receiving unit

FIG. 14

## INTERNATIONAL SEARCH REPORT

| International application No. |
| --- |
| **PCT/CN2024/092500** |

**A. CLASSIFICATION OF SUBJECT MATTER**

H04B17/309(2015.01)i

According to International Patent Classification (IPC) or to both national classification and IPC

**B. FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNABS, CNTXT, CNKI, DWPI, EPTXT, USTXT, WOTXT, VEN, 3GPP: 比例, 定位参考信号, 繁忙率, 误码率, 共享信道, 控制信号, 物理控制信道, 信号强度, 接收功率, 直连, 直通, 子信道, 阈值, CBR, busy ratio, PC5, proximity communication, PSCCH, PSSCH, RSPR, RSSI, sidelink, resource allocation for power saving, SL-PRS, positioning reference signal

**C. DOCUMENTS CONSIDERED TO BE RELEVANT**

| Category* | Citation of document, with indication, where appropriate, of the relevant passages | Relevant to claim No. |
| --- | --- | --- |
| Y | CN 106900005 A (YULONG COMPUTER TELECOMMUNICATION SCIENTIFIC (SHENZHEN) CO., LTD.) 27 June 2017 (2017-06-27) description, paragraphs [0078]-[0245], and figures 1-11 | 1-79 |
| Y | CN 112995899 A (GOHIGH DATA NETWORKS TECHNOLOGY CO., LTD.) 18 June 2021 (2021-06-18) description, paragraphs [0038]-[0154], and figures 1-10 | 1-79 |
| Y | CN 115190458 A (DATANG MOBILE COMMUNICATIONS EQUIPMENT CO., LTD.) 14 October 2022 (2022-10-14) description, paragraphs [0110]-[0300], and figures 1-10 | 2-4, 6-12, 14, 16-21, 23, 25-26, 28-30, 32-38, 40, 42-47, 49, 51-52, 54-56, 58-64, 66, 68-73, 75, 77-78 |
| A | CN 111937482 A (BEIJING XIAOMI MOBILE SOFTWARE CO., LTD.) 13 November 2020 (2020-11-13) description | 1-79 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 June 2024** | **20 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/092500**

| C. | DOCUMENTS CONSIDERED TO BE RELEVANT | |
|---|---|---|
| Category* | Citation of document, with indication, where appropriate, of the relevant passages | Relevant to claim No. |
| A | US 2023337171 A1 (LG ELECTRONICS INC.) 19 October 2023 (2023-10-19) entire document | 1-79 |

Form PCT/ISA/210 (second sheet) (July 2022)

| INTERNATIONAL SEARCH REPORT | | | | International application No. |
| --- | --- | --- | --- | --- |
| Information on patent family members | | | | **PCT/CN2024/092500** |

| Patent document cited in search report | | | Publication date (day/month/year) | Patent family member(s) | | | Publication date (day/month/year) |
| --- | --- | --- | --- | --- | --- | --- | --- |
| CN | 106900005 | A | 27 June 2017 | WO | 2020038250 | A1 | 27 February 2020 |
| | | | | US | 2021176734 | A1 | 10 June 2021 |
| | | | | EP | 3836694 | A1 | 16 June 2021 |
| | | | | IN | 202127007788 | A | 02 July 2021 |
| | | | | VN | 79226 | A | 26 July 2021 |
| | | | | EP | 3836694 | A4 | 10 November 2021 |
| | | | | CN | 110859005 | B | 21 April 2023 |
| | | | | US | 11930478 | B2 | 12 March 2024 |
| CN | 112995899 | A | 18 June 2021 | CN | 112995899 | B | 10 August 2021 |
| | | | | WO | 2022237454 | A1 | 17 November 2022 |
| | | | | KR | 20240005091 | A | 11 January 2024 |
| | | | | EP | 4336864 | A1 | 13 March 2024 |
| | | | | JP | 2024516328 | W | 12 April 2024 |
| CN | 115190458 | A | 14 October 2022 | WO | 2022206511 | A1 | 06 October 2022 |
| | | | | EP | 4319274 | A1 | 07 February 2024 |
| | | | | US | 2024163798 | A1 | 16 May 2024 |
| CN | 111937482 | A | 13 November 2020 | WO | 2021258371 | A1 | 30 December 2021 |
| | | | | IN | 202347001340 | A | 13 January 2023 |
| | | | | BR | 112022026373 | A2 | 17 January 2023 |
| | | | | KR | 20230022995 | A | 16 February 2023 |
| | | | | EP | 4175377 | A1 | 03 May 2023 |
| | | | | JP | 2023530527 | W | 18 July 2023 |
| | | | | RU | 2803646 | C1 | 19 September 2023 |
| | | | | US | 2023345550 | A1 | 26 October 2023 |
| | | | | EP | 4175377 | A4 | 24 January 2024 |
| | | | | JP | 7428834 | B2 | 06 February 2024 |
| US | 2023337171 | A1 | 19 October 2023 | KR | 20230069939 | A | 19 May 2023 |
| | | | | EP | 4216643 | A1 | 26 July 2023 |
| | | | | WO | 2022059887 | A1 | 24 March 2022 |

Form PCT/ISA/210 (patent family annex) (July 2022)

**EP 4 716 117 A1**

## REFERENCES CITED IN THE DESCRIPTION

### Patent documents cited in the description

- CN 202310544251